# EUROPÄISCHE PATENTSCHRIFT

(11) **EP 3 679 353 B1**
(45) Veröffentlichungstag und Bekanntmachung des Hinweises auf die Patenterteilung: **23.04.2025**
(21) Anmeldenummer: 18773086.6
(22) Anmeldetag: 30.08.2018
(51) Int. Cl.: G01N 21/64, G01N 15/14

(54) **AEROSOLPARTIKELMESSGERÄT ZUR BESTIMMUNG VON MATERIALIEN IN ECHTZEIT MITTELS FLUORESZENZLEBENSZEIT MESSUNG IM FREQUENZBEREICH**
MEASURING DEVICE FOR DETERMINING MATERIALS IN REAL TIME BY MEANS OF FLUORESCENCE LIFETIME MEASURING IN THE FREQUENCY DOMAIN
APPAREIL DE MESURE PERMETTANT LA DÉTERMINATION DE MATIÈRES EN TEMPS RÉEL AU MOYEN DE MESURE DE TEMPS DE VIE DE FLUORESCENCE DANS LE DOMAINE DES FRÉQUENCES

(30) Priorität: 05.09.2017 EP 17189312
(43) Veröffentlichungstag der Anmeldung: 15.07.2020
(73) Patentinhaber: Swisens AG, 6032 Emmen (CH)
(72) Erfinder: NIEDERBERGER, Erny, 6006 Luzern (CH); ABT, Reto, 6005 Luzern (CH); BURCH, Philipp, 8200 Schaffhausen (CH)
(74) Vertreter: Koelliker, Robert
(86) Internationale Anmeldenummer: PCT/EP2018/073306
(87) Internationale Veröffentlichungsnummer: WO 2019/048322

(56) Entgegenhaltungen:
- EP-A1- 1 109 005
- WO-A1-2017/129390
- WO-A2-2005/062018
- US-A1- 2013 242 301
- US-A1- 2014 268 142
- P. VITTA ET AL: "Fluorescence-lifetime identification of biological agents using deep ultraviolet light-emitting diodes", PROCEEDINGS OPTICAL DIAGNOSTICS OF LIVING CELLS II, vol. 5990, 13 October 2005 (2005-10-13), US, pages 59900X, XP055436139, ISSN: 0277-786X, ISBN: 978-1-5106-1324-9, DOI: 10.1117/12.630573
- ALBERTO DALLA MORA ET AL: "Fast silicon photomultiplier improves signal harvesting and reduces complexity in time-domain diffuse optics", OPTICS EXPRESS, vol. 23, no. 11, 19 May 2015 (2015-05-19), pages 13937, XP055524769, DOI: 10.1364/OE.23.013937
- ANONYMOUS: "Silicon photomultiplier - Wikipedia", 27 March 2017 (2017-03-27), XP055573532, Retrieved from the Internet <URL:https://web.archive.org/web/20170327123426/https://en.wikipedia.org/wiki/Silicon_photomultiplier> [retrieved on 20190325]
- ANONYMOUS: "Avalanche-Photodiode - Wikipedia", 9 August 2017 (2017-08-09), XP055573533, Retrieved from the Internet <URL:https://web.archive.org/web/20170809020755/https://de.wikipedia.org/wiki/Avalanche-Photodiode> [retrieved on 20190325]
- DAVID J. O'CONNOR ET AL: "Using spectral analysis and fluorescence lifetimes to discriminate between grass and tree pollen for aerobiological applications", ANALYTICAL METHODS, vol. 6, no. 6, 1 January 2014 (2014-01-01), GBR, pages 1633 - 1639, XP055435912, ISSN: 1759-9660, DOI: 10.1039/C3AY41093E
- THOMAS A ET AL: "EMISSION WAVELENGTH DEPENDENCE OF FLUORESCENCE LIFETIMES OF BACTERIOLOGICAL SPORES AND POLLENS", APPLIED OPTICS, OPTICAL SOCIETY OF AMERICA, WASHINGTON, DC; US, vol. 45, no. 25, 1 September 2006 (2006-09-01), pages 6634 - 6639, XP001249819, ISSN: 0003-6935, DOI: 10.1364/AO.45.006634
- MIKHAIL Y. BEREZIN ET AL: "Fluorescence Lifetime Measurements and Biological Imaging", CHEMICAL REVIEWS, vol. 110, no. 5, 12 May 2010 (2010-05-12), US, pages 2641 - 2684, XP055413188, ISSN: 0009-2665, DOI: 10.1021/cr900343z

## Beschreibung

Die vorliegende Erfindung betrifft ein Aerosolpartikelmessgerät und ein Verfahren zur qualitativen und/oder quantitativen Bestimmung von fluoreszierenden Materialien in Echtzeit mittels Fluoreszenzlebenszeit Messung, sowie die Verwendung des Aerosolpartikelmessgeräts und des Verfahrens.

In unserer Gesellschaft nimmt das Vorkommen der allergischen Rhinitis, auch Pollenallergie oder Heuschnupfen genannt, stetig zu und die Anzahl Betroffener steigt weltweit. In der Schweiz gelten zurzeit 15-20% der Bevölkerung als allergisch auf Pollen. Dies macht nicht nur einen wesentlichen Anteil an den Gesundheitskosten aus, sondern auch die ökonomischen Kosten sind nicht zu vernachlässigen.

Um Pollenallergikern in Europa die geeignete Information über den Pollenflug zu geben, müssen 10 bis 20 verschiedene Pollensorten unterschieden werden. Eine ältere, aber immer noch sehr häufig angewendete Methode zur Messung der Pollen basiert auf Hirst Pollenfallen. In diesen werden Klebestreifen montiert, an welchen sich die in der Luft befindlichen Pollen anheften. Die so gesammelten an den Klebestreifen haftenden Pollen werden dann periodisch im Labor von einer ausgebildeten Fachperson beispielsweise manuell mittels Lichtmikroskopie untersucht und anschliessend identifiziert. Die Resultate der qualitativen und quantitativen Pollenbestimmung liegen deshalb in der Regel erst mit einigen Tagen Zeitverzögerung vor. Zudem ist der Aufwand beträchtlich und kostenintensiv, obwohl von einer Messunsicherheit von bis zu 25% ausgegangen wird.

Deshalb liegen beispielsweise in der Schweiz aufgrund der zurzeit verfügbaren Messmethodik die Pollendaten trotz einer nicht unwesentlichen Ungenauigkeit erst mit einer Verzögerung von ca. einer Woche vor. Hinzu kommt, dass die geografische Auflösung sehr gering ist, da es zurzeit in der Schweiz lediglich 14 Messstationen gibt.

In der neueren Zeit wurden verschiedene Messsysteme zur schnelleren Pollenbestimmung vorgeschlagen. Dabei wird oft die Messung der Fluoreszenz der zu untersuchenden Materialien als geeignete Methode vorgeschlagen.

Unter Fluoreszenz wird die spontane Emission von Licht, d.h. von Photonen, direkt nach der Anregung eines Materials verstanden, wobei das vom Material emittierte Licht in der Regel energieärmer ist, als das zur Anregung des Materials verwendete. Materialien mit dieser Eigenschaft werden fluoreszierende Materialien genannt. Weisen die Materialien von sich aus diese Eigenschaft auf, spricht man von Autofluoreszenz, auch Eigenfluoreszenz genannt. Ist das anregbare Material Teil eines Organismus, spricht man von Biofluoreszenz. Materialien ohne Autofluoreszenz können mittels eines Fluoreszenzfarbstoffs, d.h. mittels eines Fluorochroms, behandelt, d.h. eingefärbt bzw. markiert, werden, wodurch sie mittels Fluoreszenzmessung untersucht werden können.

Wenn ein fluoreszierendes Material mit Licht einer geeigneten Wellenlänge bestrahlt wird, wird das Licht vom Material absorbiert, d.h. die bestrahlten Atome und Moleküle nehmen die Lichtenergie auf. Dabei werden Elektronen vom Grundzustand auf ein höheres Energieniveau angehoben. Beim anschliessenden Übergang zurück in den Grundzustand wird ein Photon emittiert. Bei fluoreszierenden Materialien ist das emittierte Photon energieärmer als dasjenige des Anregungslichts. Mit anderen Worten: Das vom angeregten Material emittierte Photon weist eine längere Wellenlänge auf als das Photon des Anregungslichts. Dieses Phänomen wird auch Fluoreszenzemission genannt.

Die Fluoreszenzemission ist abhängig von der Anregungswellenlänge, der Anregungsintensität und dem jeweiligen Material. Somit ändert sich das emittierte Licht je nach der chemischen Beschaffenheit des angeregten Materials und ist zudem abhängig vom Anregungslicht. Wird nun das emittierte Licht analysiert, können Rückschlüsse auf das untersuchte Material gezogen werden. Zur Anregung geeignete Wellenlängen - zum Beispiel im Fall von Biofluoreszenz - befinden sich im UV- und UV-nahen Wellenlängenbereich, wie beispielsweise der UV-A Bereich mit Wellenlängen von 315-380nm, der UV-B Bereich mit Wellenlängen von 280-315nm, der UV-C Bereich mit Wellenlängen von 100-280nm sowie der UV-nahe Bereich mit Wellenlägen von 380nm bis 410nm.

Geeignete Messgrössen der Fluoreszenzemission sind die Intensität und die Lebenszeit bei einer oder mehreren Emissionswellenlängen.

Um die Intensität der Fluoreszenzemission zu messen, wird typischerweise das zu untersuchende Material mit einer bestimmten Lichtwellenlänge und Lichtintensität angeregt und die Stärke der Emission bei einer oder mehreren Wellenlägen gemessen. Dabei werden zur Detektion der Emission Photomultipliziererröhren (englisch: Photomultiplier Tubes, PMT) und miniaturisierte Photomultipliziererröhren, sogenannte Multi Channel Plates (MCP), eingesetzt. Die gemessene Intensität der emittierten Photonen ist nicht nur abhängig von der Anregungswellenlänge, sondern auch vom untersuchten Material. Sie wird insbesondere zur Untersuchung von stationären Materialien angewendet und eignet sich insbesondere für die Fluoreszenzmikroskopie. Die Messung der Intensität der Fluoreszenzemission eignet sich jedoch nicht zur zweifelsfreien Bestimmung von unterschiedlichen Aerosolpartikeln wie Pollen.

Bei der Messung der Fluoreszenzlebenszeit, auch Fluoreszenzlebensdauer genannt, wird die charakteristische zeitliche Dauer gemessen, während welcher Photonen nach einer kurzen Anregung emittiert werden. Unter Fluoreszenzlebenszeit wird die mittlere Zeit verstanden, während welcher ein Molekül in einem angeregten Zustand bleibt, bevor es ein Photon emittiert und dadurch wieder in den Grundzustand zurückkehrt. Die Fluoreszenzlebenszeit liegt typischerweise im Bereich von 10⁻¹² bis 10⁻⁸ Sekunden und ist spezifisch für einzelne chemische Gruppen und/oder Moleküle, d.h. das angeregte Material, und ist abhängig von der Anregungswellenlänge, jedoch grösstenteils unabhängig von der Intensität der Anregung und der Konzentration der fluoreszierenden Atome und Moleküle im Material.

Die Fluoreszenzlebenszeit von fluoreszierenden Materialien kann im Zeitbereich (englisch: time-domain) oder im Frequenzbereich (englisch: frequency-domain oder phase-modulation) gemessen werden.

Bei der Fluoreszenzlebenszeitmessung - sowohl im Zeitbereich als auch im Frequenzbereich - werden zur Detektion der empfangenen Photonen ebenfalls Photomultipliziererröhren (PMT) und miniaturisierte Photomultipliziererröhren (MCP), eingesetzt. PMTs und MCPs weisen ein optimales Signal-zu-Rauschen Verhältnis und eine Verstärkung von ca. 10⁷ auf und sind insbesondere für die Einzelphotonendetektion geeignet und somit für die Fluoreszenzlebenszeit Messung im Zeitbereich. Photomultipliziererröhren werden heutzutage aber auch für die Fluoreszenzlebenszeit Messung im Frequenzbereich eingesetzt. Allerdings muss darauf geachtet werden, dass die pro Zeiteinheit empfangene Anzahl Photonen einen relativ niedrigen Wert nicht übersteigt, damit die Photomultipliziererröhren nicht überlastet und zerstört werden. PMTs und MCPs sind zudem teuer, gross und benötigen eine Betriebsspannung von bis zu 1000 Volt oder mehr, was sie für eine Miniaturisierung ungeeignet macht.

Bei der Fluoreszenzlebenszeit Messung im Zeitbereich wird das zu untersuchende Material mit Lichtpulsen angeregt. Danach werden einzelne Fluoreszenzphotonen gemessen. Als wichtige Standardmethode der Fluoreszenzlebenszeit Messung im Zeitbereich hat sich die sogenannte Zeitkorrelierte Einzelphotonenzählung (englisch: Time Correlated Single Photon Counting Method, abgekürzt TCSPC) etabliert. Sie wird zum Beispiel zur Untersuchung von biologischen Makromolekülen wie Proteine und zur Bildgebung von Zellen eingesetzt. Dabei werden Lichtpulse mit definierter Intensität und von kurzer Dauer im Pikosekundenbereich verwendet, wobei die geforderten kurzen und intensiven Lichtpulse typischerweise mit Lasern erzeugt werden. Die Fluoreszenzlebenszeit im Zeitbereich und somit die zeitkorrelierte Einzelphotonenzählung erfordert sehr schnelle Messsysteme zur Detektion der empfangenen Photonen sowie einen sehr sensitiven Detektor. Dies macht solche Messanordnungen aufwändig, teuer und empfindlich gegenüber äusseren Einflüssen. Deshalb ist die TCSPC-Methode geeignet zur Untersuchung von stationären Materialien wo längere Messzeiten möglich sind, nicht aber für sich schnell bewegende Objekte wie Aerosole. Somit eignet sich die Fluoreszenzlebenszeit Messung im Zeitbereich, wie die TCSPC-Methode, nicht zur Bestimmung von Pollen im Flug.

Bei der Fluoreszenzlebenszeit Messung im Frequenzbereich (englisch: Frequency Domain Fluorescence Lifetime Measurement, abgekürzt FD FLM), wird die Fluoreszenz periodisch mittels Licht, dessen Intensität moduliert ist, angeregt. Die gemessene Fluoreszenzemission variiert deshalb auch periodisch, jedoch mit einer Phasenverschiebung bezüglich der Anregungsmodulation. Diese Phasenverschiebung und die Stärke der Fluoreszenzmodulation sind abhängig von der Fluoreszenzlebenszeit des angeregten Materials, wodurch Rückschlüsse auf das untersuchte Objekt möglich sind. Im Gegensatz zur Fluoreszenzlebenszeit Messung im Zeitbereich ermöglicht die Fluoreszenzlebenszeit Messung im Frequenzbereich die Detektion einer Vielzahl an Photonen, wodurch mehr Photonen pro Zeiteinheit erfasst werden können. Dadurch eignet sich die Methode insbesondere auch zur Messung von dynamischen Systemen wie der bildgebenden Untersuchung von Zellen, wie beispielsweise Krebszellen. Allerdings ist es zurzeit aufgrund der äusserst kurzen möglichen Messdauer nicht möglich, mittels Fluoreszenzlebenszeit Messung im Frequenzbereich eine qualitative und/oder quantitative Bestimmung von Aerosolpartikeln wie Pollen im Flug vorzunehmen.

Daher gibt es bis heute keine zuverlässige Methode zur Bestimmung von Pollen in Echtzeit. Somit können Pollenallergiker aufgrund der verzögerten Angaben zu den aktuell vorhandenen Pollen nicht rechtzeitig geeignete Vorsichtsmassnahmen treffen. Dies führt zu einer Beeinträchtigung ihrer Lebensqualität und in aller Regel auch zu grösseren volkswirtschaftlichen Kosten.

Somit ist es die Aufgabe der vorliegenden Erfindung ein Messgerät zur Verfügung zu stellen, mit welchem eine Vielzahl von unterschiedlichsten Aerosolpartikel wie Pollen innerhalb kurzer Zeit und mit grosser Sicherheit qualitativ und gegebenenfalls auch quantitativ bestimmt werden kann, um beispielsweise die Pollenallergiker schon kurz nach dem ersten Pollenflug korrekt zu informieren. Zudem soll das Messgerät kompakt, robust und kostengünstig sein, sodass es vielseitig und idealerweise flexibel, d.h. an wechselnden Orten, eingesetzt werden kann.

Diese Aufgabe konnte überraschenderweise gelöst werden mit einem Aerosolpartikelmessgerät gemäß Anspruch 1.

Beansprucht wird auch ein Verfahren zur qualitativen und/oder quantitativen Bestimmung von fluoreszierenden Materialien (2) in Echtzeit mittels Fluoreszenzlebenszeit Messung mit dem erfindungsgemässen Aerosolpartikelmessgerät (20), wobei
i) die Fluoreszenzlebenszeit Messung im Frequenzbereich durchgeführt wird und das von der Lichtquelle (3) emittierte Licht (31) intensitätsmoduliert wird,
ii) als Lichtquelle (3) ein Diodenlaser, eine LED und/oder ein diodengepumpter Festkörperlaser eingesetzt wird,
iii) die Materialien (2) in Form von Aerosolpartikel eines Aerosols in der Messkammer (8) des Messgeräts (1) gemessen werden,
iv) in der Messkammer (8) die Aerosolpartikel dem Licht (31) der Lichtquelle (3) ausgesetzt werden, wobei die Aerosolpartikel das Licht absorbieren und teilweise wieder emittieren,
v) das emittierte Licht mit dem Detektor (4) detektiert wird, wobei als Detektor (4) ein auf Halbleitertechnologie basierter elektronischer Photonendetektor zur Lichtdetektion, insbesondere ein Silicon Photomultiplier (SiPM), eingesetzt wird, und
vi) die erhaltenen Daten mit einem Datenverarbeitungsprogramm verarbeitet werden.

Zudem wird auch die Verwendung des erfindungsgemässen Aerosolpartikelmessgeräts (20) und/oder des erfindungsgemässen Verfahrens zur qualitativen und/oder quantitativen Bestimmung mittels Fluoreszenzlebenszeit Messung im Frequenzbereich beansprucht, insbesondere in Echtzeit, von fluoreszierenden Materialien (2) in Form von Aerosolpartikeln eines Aerosols, insbesondere von in der Luft schwebenden Pollen und/oder Sporen, sowie zur Prozess- und/oder Qualitätskontrolle von Materialien (2) wie beispielsweise in der Verfahrenstechnik.

Überraschenderweise wurde gefunden, dass durch das erfindungsgemässe Aerosolpartikelmessgerät (20), das erfindungsgemässe Verfahren sowie die erfindungsgemässe Verwendung mit dem auf Halbleitertechnologie basierenden elektronischen Photonendetektor zur Lichtdetektion, d.h. des Detektors (4), wie insbesondere ein Silicon Photomultiplier (SiPM), die anspruchsvolle Aufgabe erfüllt werden kann. Denn aufgrund der Fluoreszenzlebenszeit Messung im Frequenzbereich können die zu untersuchenden Proben wie Aerosolpartikel und Pollen mit stärkeren Lichtintensitäten bestrahlt werden, was zu einer wesentlich grösseren Anzahl emittierter und auch detektierter Photonen - und somit zu kürzeren Messzeiten - führt. Somit können unerwarteterweise auch äusserst kleine Proben mit z.T. sehr schwachen Fluoreszenzemissionen wie beispielsweise Aerosolpartikel wie Pollen im Flug - und somit in Echtzeit - quantitativ und qualitativ analysiert werden. Somit können beispielsweise relevante Informationen zu Pollen den Allergikern innerhalb von Minuten oder wenigen Stunden zur Verfügung gestellt werden.

Der im Aerosolpartikelmessgerät (20) und im Verfahren erfindungsgemäss eingesetzte Detektor (4) erlaubt es auch eine sehr grosse Anzahl von Photonen zu messen und zu verarbeiten. Der Detektor (4) wie SiPM weist zwar eine deutlich höhere Dunkelpulsrate auf als die im Stand der Technik eingesetzten Photomultipliziererröhren. Trotzdem wird - für den Fachmann unerwartet - ein genügendes Signal-zu-Rauschen Verhältnis erzielt, wodurch eine schnelle und genaue Messung erzielt werden kann.

Da mit dem Aerosolpartikelmessgerät (20) und dem Verfahren eine sehr grosse Anzahl von Photonen gleichzeitig gemessen werden kann, eignen sich das Aerosolpartikelmessgerät (20) und das Verfahren hervorragend zur qualitativen und/oder quantitativen Bestimmung von fluoreszierenden Materialien (2) in Echtzeit mittels Fluoreszenzlebenszeit Messung.

Zudem ist das Aerosolpartikelmessgerät (20) robust, schnell, effizient und auch bei üblicherweise verfügbarer Betriebsspannung einsetzbar, wodurch sie auch im Aussenbereich und/oder als mobile Messgeräte geeignet sind. Zudem können sie kostengünstiger und mit geringen Abmessungen gebaut werden. So kann beispielsweise das Messgerät (1) mit Aussenmassen von etwa 10 × 5 x 5 cm³ und das Aerosolpartikelmessgerät (20) mit Aussenmassen von etwa 30 x 30 x 30 cm³ gebaut werden, wodurch sie an zusätzlicher Attraktivität gewinnen. Dadurch können ohne nennenswerten Aufwand und zu vertretbaren Kosten wesentlich mehr Pollenmessstationen aufgebaut werden und der Automationsgrad der Pollenbestimmung kann deutlich erhöht werden, was zu einem dichteren Pollenflug-Datennetz und somit zu einer besseren räumlichen Auflösung führt. Somit werden den Pollenallergikern wesentlich schneller viel exaktere Informationen zum tagesaktuellen Pollenflug bereitgestellt, was wiederum die Lebensqualität der Pollenallergiker erhöht und die volkswirtschaftlichen Kosten senkt.

Somit kann das erfindungsgemässe Aerosolpartikelmessgerät (20) überraschenderweise äusserst vielfältig verwendet werden. Auch können sehr schnell bewegliche Partikel wie Aerosolpartikel von Aerosolen, insbesondere eine Vielzahl - beispielsweise 20 oder mehr - an unterschiedlichen Pollen und Sporen, in Echtzeit und sogar im Flug quantitativ und qualitativ untersucht und voneinander unterschieden werden, was bis anhin nicht möglich gewesen ist.

Die EP-A-1109005 beschreibt ein Zählverfahren für Pollenkörner und eine Pollen-Zählapparatur umfassend das Abscheiden von in einer bestimmten Atmosphärenmenge enthaltenen Partikeln mit Ausnahme der Partikel, die wesentlich kleiner als Pollenkörner sind, und das Veranlassen der abgeschiedenen Partikel eine Durchflusszelle in solch einem Zustand zu durchströmen, dass die Eigenfluoreszenz von jedem Partikel gemessen werden kann. Als Fluoreszenzmessung wird lediglich die Intensität der Fluoreszenzemission gemessen, wodurch die erhaltene Information zu den gemessenen Partikeln stark limitiert ist. Dies wiederum schränkt den Einsatzbereich des Verfahrens und der Apparatur stark ein. Als Detektor werden Photomultipliziererröhren (PMT) eingesetzt, wodurch die Messtechnik wesentlich aufwändiger, grösser, teurer und störungsanfälliger wird. Zwar können mit dem vorgeschlagenen Zählverfahren und der vorgeschlagenen Zählapparatur mehrere verschiedene Pollensorten voneinander unterschieden werden. Die in Europa notwendige Unterscheidung von 10 bis 20 verschiedenen Pollensorten ist jedoch nicht möglich.

Die US-A-2016/0266087 offenbart Vorrichtungen und Verfahren zur Unterscheidung von Gewebe-Proteinen, d.h. statische Proben, mittels Fluoreszenz-Lebenszeitspektroskopie im Frequenzbereich. Die Vorrichtungen umfassen eine modulierte Lichtquelle, eine optische Fokussierungsfaser, eine optische Detektionsfaser und einen Detektor. Solche Fokussier- und Detektionsfasern führen das Licht zum externen Detektor. Dadurch ändert sich bei jedem Ein- und Ausstecken die Gesamttransmission, wodurch das Gerät neu kalibriert werden muss. Solche Geräte eignen sich für Laborgeräte, nicht aber für Feldgeräte. Die vorgeschlagenen Vorrichtungen und Verfahren eignen sich nicht für ein Aerosolpartikelmessgerät zur Bestimmung von fluoreszierenden Materialien wie Aerosolpartikel eines Aerosols in Echtzeit.

### Messgerät (1)

Das Messgerät (1) des erfindungsgemässen Aerosolpartikelmessgeräts (20) ist geeignet zur qualitativen und/oder quantitativen Bestimmung von fluoreszierenden Materialien (2) in Echtzeit mittels Fluoreszenzlebenszeit Messung im Frequenzbereich. Es können insbesondere Messungen von schnell beweglichen Proben wie Aerosolen - und somit von Partikeln in der Gasphase - durchgeführt werden.

Das Messgerät (1) umfasst mindestens eine Lichtquelle (3), mindestens einen Detektor (4) sowie eine Messkammer (8). Vorzugsweise umfasst das Messgerät (1) zudem mindestens eine Anregungsoptik (6), mindestens eine Detektoroptik (7), ein Programm zur Datenverarbeitung und/oder eine Elektronik zur Gerätesteuerung, Signalmessung, Signalaufbereitung, Signalauswertung und zur Datenspeicherung.

Gemäss vorliegender Erfindung wird unter Echtzeit verstanden, dass die Messung sofort und somit in einem Sekundenbruchteil, beispielsweise während einigen Nano-, Mikro- oder Millisekunden, erfolgen kann. Die anschliessende Auswertung der erhaltenen Daten dauert je nach erhaltener Datenmenge und Rechnerleistung typischerweise Sekunden bis wenige Stunden. Somit können Materialien (2) bestimmt werden, die nur während einer äusserst kurzen Zeit dem emittierten Licht (31) ausgesetzt sind und Fluoreszenz emittieren können, wie auch statische Materialien (2), die über einen längeren Zeitraum untersucht werden können.

### Materialien (2)

Mit dem Aerosolpartikelmessgerät (20) - und somit mit dem Messgerät (1) - zu untersuchende Materialien (2) sind erfindungsgemäss Aerosolpartikel eines Aerosols. Geeignete Materialien (2) sind dem Fachmann bekannt. Sie können eine Autofluoreszenz aufweisen und/oder mittels eines Fluorophors, d.h. Fluorochroms, vor der Messung behandelt werden.

Unter dem Begriff «Aerosolpartikel eines Aerosols» wird erfindungsgemäss verstanden, dass die Aerosolpartikel in der Gasphase dispergiert sind. Demzufolge bestimmt das Aerosolpartikelmessgerät (20) die Aerosolpartikel in der Gasphase und somit im Flug.

Unter Aerosol wird erfindungsgemäss ein Gemisch von Aerosolpartikeln, auch Schwebeteilchen genannt, in einem Gas oder Gasgemisch verstanden, wobei die Schwebeteilchen bei Umgebungstemperatur in fester und/oder flüssiger Form vorliegen und typischerweise einen mittleren Durchmesser von etwa 20 nm bis etwa 100 µm oder mehr aufweisen. Luft ist ein typisches Gasgemisch bei Aerosolen, die im Alltag eine Bedeutung haben und oft eine gesundheitliche Beeinträchtigung oder sogar Belastung darstellen können.

Nicht-limitierende Beispiele von Aerosolen die mit dem erfindungsgemässen Aerosolpartikelmessgerät (20) gemessen werden können, umfassen Pollen, insbesondere Blüten-, Gräser-, Pflanzen- und Baumpollen, Sporen wie Schimmelpilzsporen, insbesondere Aspergillus fumigatus, Alternaria alternata, Penicillium notatum und Cladosporium herbarum, Bakterien, Exkremente von Hausstaubmilben, Allergene von Haustieren, Viren, Feinstaub, Rauch, insbesondere Zigarettenrauch, Brandgas und Rauchgas, Russ und Ölqualm aus Verbrennungsmotoren wie beispielsweise Autoabgase, Schwefeldioxid, Asche wie Vulkanasche, und/oder Nanopartikel, die beispielsweise industriell hergestellt werden können.

Bevorzugte Materialien (2) umfassen fluoreszierende organische und/oder anorganische reine Stoffe oder Gemische und können in Form eines Feststoffs, einer Flüssigkeit, einer Dispersion, einer Suspension, einer Paste, und/oder in Form von in Luft dispergierten Bioaerosolpartikeln wie Pollen, Blütenstaub, Sporen, Pilzsporen, Pflanzensporen, Proteine, DNA, RNA, Organismen, Gewebe, Zellen, Bakterien, Viren und/oder Mineralstaub vorliegen und gegebenenfalls vorgängig mit einem Fluorophor behandelt worden sein.

### Lichtquelle (3)

Das Messgerät (1) des Aerosolpartikelmessgeräts (20) umfasst u.a. mindestens eine Lichtquelle (3) und mindestens einen Detektor (4). Das von der Lichtquelle (3) emittierte Licht (31) weist typischerweise eine Wellenlänge im UV- und nahen UV-Bereich auf. Werden mehrere Lichtquellen (3) eingesetzt, kann das von den Lichtquellen (3) emittierte Licht (31) die gleiche oder jeweils eine andre Wellenlänge aufweisen.

In einer bevorzugten Ausführungsform wird das von der Lichtquelle (3) emittierte Licht (31) intensitätsmoduliert, d.h. die Fluoreszenzanregung erfolgt intensitätsmoduliert, insbesondere sinusförmig intensitätsmoduliert, wobei in der Regel die Modulierung durch die im Messgerät (1) vorhandene Elektronik erfolgt. Alternativ oder zusätzlich ist die Lichtquelle (3) ein Diodenlaser, insbesondere ein UV-Diodenlaser, eine LED, insbesondere eine UV-LED, und/oder ein diodengepumpter Festkörperlaser, insbesondere ein diodengepumpter UV-Festkörperlaser.

UV-LEDs sind besonders bevorzugt, wobei der Begriff UV-LED für eine Licht emittierende Diode mit Licht im UV-Wellenlängen Bereich steht. Diodengepumpte Festkörperlaser sind auch unter dem englischen Begriff diode pumped solid state, abgekürzt mit DPSS oder DPSSL, bekannt. LEDs und UV-LEDs sind halbleiterbasiert und können kostengünstig produziert werden. Auch sind UV-LEDs bedeutend kleiner als herkömmliche UV-Laser oder UV-Lampen, was hilft, das Messgerät (1) klein zu halten. Zudem reicht in der Regel die Emissionsleistung einer LED, insbesondere UV-LED, aus, weil erfindungsgemäss die zur Verfügung stehende Leistung der Lichtquelle effizient für die Anregung genutzt wird. Alternativ können zwei oder sogar mehr als zwei Lichtquellen (3) wie UV-LEDs oder Laserdioden gleicher oder unterschiedlicher Wellenlänge eingesetzt werden.

In einer bevorzugten Ausführungsform, die u.a. bei der Messung von fluoreszierenden biologischen Aerosolpartikeln bevorzugt ist, werden zwei oder mehr Lichtquellen (3) mit unterschiedlichen Wellenlängen, die bevorzugt unterschiedliche Modulationsfrequenzen aufweisen, eingesetzt, um unterschiedliche chemische Gruppen anzuregen und deren Fluoreszenzlebenszeit zu messen. Neben der zeitlich aufeinanderfolgenden Anregung mit verschiedenen Wellenlängen kann auch parallel angeregt werden. Denn wenn die Modulationsfrequenz der verschiedenen Wellenlängen unterschiedlich ist, ist eine gleichzeitige Anregung und Fluoreszenzmessung von unterschiedlichen chemischen Gruppen möglich. Ein nicht-limitierendes Beispiel ist eine Laserdiode mit emittierendem Licht mit einer Wellenlänge von 405nm, eine UV-LED mit emittierendem Licht mit einer Wellenlänge von 365nm und eine weitere UV-LED mit emittierendem Licht mit einer Wellenlänge von 280nm.

### Detektor (4)

Der Detektor (4) misst das Licht (31), welches von der Lichtquelle (3) emittiert wird und bis zum Detektor (4) gelangt. Regt das emittierte Licht (31) zu untersuchende, fluoreszierende Materialien (2) an, werden von diesen Photonen, auch Lichtquanten oder Lichtteilchen genannt, emittiert, die eine vom emittierten Licht (31) unterschiedliche Wellenlänge aufweisen. Diese Photonen können vom Detektor (4) ebenfalls gemessen werden.

Das Aerosolpartikelmessgerät (20) und somit im Messgerät (1) erfindungsgemäss eingesetzte Detektor (4) ist ein auf Halbleitertechnologie basierter elektronischer Photonendetektor zur Lichtdetektion, insbesondere ein Silicon Photomultiplier (SiPM). Solche Silicon Photomultiplier (SiPM) sind auch unter den Begriffen Pixelated geiger-mode avalanche photodiodes (PPDs), Silicon Photomultiplier (SPM), Multi Pixel Photon Counter (MPPC), Multi-Pixel Avalanche Photodiode (PMAD), Geiger Mode Avalanche Photodiode (G-APD) oder Multi-Pixel Geiger-Mode Avalanche Photodiode (MPGM APD) bekannt.

Auf Halbleitertechnologie basierende elektronische Multi-Pixel Detektoren (4) wie Silicon Photomultiplier (SiPM) besitzen im Vergleich zu Photomultipliziererröhren (PMT) ein kleineres Volumen, wodurch das Messgerät (1) kleiner und handlicher hergestellt werden kann im Vergleich zu herkömmlichen Geräten. Zudem sind SiPMs auch kostengünstiger und benötigen keine Hochspannungsquelle von typischerweise einigen 1000 Volt zum Betrieb, sondern es genügen beispielsweise zwischen 40 bis 70 Volt. Sie weisen zum Teil eine bessere Quanteneffizienz auf und sind robuster gegenüber mechanischen Einflüssen wie Vibration oder Stössen sowie gegenüber Magnetfeldern.

Zwar weisen die erfindungsgemäss eingesetzten Detektoren (4) wie SiPM gegenüber den PMTs einen höheren Dunkelstrom sowie eine Totzeit auf. Trotzdem wurde überraschenderweise gefunden, dass die Auswirkungen des höheren Dunkelstroms und der Totzeit durch den Einsatz der Detektoren (4) sich bei der Fluoreszenzlebenszeit im Frequenzbereich nicht nachteilig auswirken. Dadurch kann unter Einsatz von einem oder mehrerer Detektoren (4) ein kompaktes, robustes und daher mobiles sowie wartungsarmes und günstiges Messgerät (1), und somit ein Fluoreszenzlebenszeit Messsystem, bereitgestellt werden.

### Weitere Komponenten des Messgeräts (1)

In einer bevorzugten Ausführungsform umfasst das Messgerät (1) als weitere Komponenten zudem mindestens eine Anregungsoptik (6), mindestens eine Detektoroptik (7), ein Programm zur Datenverarbeitung, ein lichtundurchlässiges Gehäuse sowie eine Elektronik zur Gerätesteuerung, Signalmessung, Signalaufbereitung, Signalauswertung und zur Datenspeicherung.

Zudem umfasst das Messgerät (1) vorteilhafterweise keine optischen Fasern bzw. Lichtwellenleiter oder Lichtleitkabel wie beispielsweise optische Fokussierungsfasern, welche das Licht von einer externen Quelle zur Beleuchtungsoptik leiten, optische Detektionsfasern, welche das Licht zu einem externen Detektor leiten, d.h. die Detektoren (4) sind bevorzugt im Gerät integriert. Dadurch wird das Gerät sensitiver, weil die Verluste durch die Glasfasern wegfallen. Auch erhöht sich die Langzeitstabilität der Messresultate, was insbesondere für den Langzeitbetrieb im Feld von grossem Vorteil ist.

Die optionale, jedoch oft bevorzugte Datenspeicherung erlaubt das Speichern der Daten vor Ort, ohne dass sie direkt weiter geleitet werden müssen. Somit ist es in einem ersten Schritt möglich, Daten zu messen und erst in einem zweiten Schritt vor Ort und/oder an einem externen Ort zu analysieren. Geeignete Datenspeicherungen sind dem Fachmann bekannt.

Das optionale, jedoch oft bevorzugt vorhandene Programm zur Datenverarbeitung erlaubt eine sofortige Aufbereitung der Daten vor Ort, d.h. beim Standort des Aerosolpartikelmessgeräts (20). Dies ist insbesondere bei mobilen und/oder stand-alone Geräten, wie beispielsweise im Aussenbereich stationierte Aerosolpartikelmessgeräte (20), äusserst hilfreich. Dem Fachmann sind geeignete Datenverarbeitungsprogramme bekannt.

Mit der optionalen, jedoch oft bevorzugten Elektronik können vorteilhafterweise die gewünschten Einstellungen gemacht und Parameter variiert werden. Nicht-limitierende Beispiele umfassen die Ansteuerung der Lichtquelle, die Einstellung, Verstärken und/oder Modulieren der notwendigen Frequenz, typischerweise im hohen MHz-Bereich, sowie Verarbeitung des gemessenen Lichts mit Fluoreszenzanregung im Vergleich zum emittierten Licht (31) ohne Fluoreszenzanregung. Der Fachmann kann eine geeignete Elektronik spezifisch für das Messgerät (1) und/oder das ganze Aerosolpartikelmessgerät (20) bereitstellen, ohne erfinderisch zu werden.

Das Messgerät (1) umfasst zudem vorteilhafterweise ein lichtundurchlässiges Gehäuse um störende Effekte, wie Umgebungslicht, von der Messanordnung fern zu halten. Dem Fachmann sind geeignete Materialien für solche Gehäuse bekannt. Auch kann er damit ohne erfinderische Tätigkeit lichtundurchlässige Gehäuse erstellen.

### Anregungsoptik (6) und Detektoroptik (7)

Die optionale, jedoch bevorzugte Anregungsoptik (6) hat die Aufgabe, das von der Lichtquelle (3) emittierte Licht (31) zu bündeln und sehr fokussiert auf das zu untersuchende Material (2), d.h. auf die zu messende Probe, zu senden. Beim erfindungsgemässen Aerosolpartikelmessgerät (20) wird die Probe, d.h. die Aerosolpartikel mit dem Aerosol, im Flug durch die Messkammer (8) hindurch gefördert. Dabei wird durch die Anregungsoptik (6) das emittierte und fokussierte Licht (31) auf einen Ort in der Messkammer (8) fokussiert, durch welchen die zu messenden Aerosolpartikel hindurch befördert werden. Dadurch werden die Aerosolpartikel automatisch durch das emittierte Licht (31) angeregt.

Die Anregungsoptik (6) des Messgeräts (1) ist vorteilhafterweise zwischen der Lichtquelle (3) und dem zu bestimmenden Material (2) angeordnet, wobei die Anregungsoptik (6) mindestens eine optische Linse (9) und bevorzugt mindestens einen optischen Filter (10), sowie gegebenenfalls mindestens einen Reflektor (11) umfasst.

Das Messgerät (1) kann eine oder mehrere gleiche und/oder unterschiedliche Anregungsoptiken (6) umfassen. Die Anregungsoptik (6) kann gleich oder verschieden sein, unabhängig von der Art der Lichtquellen (3), d.h. ob die Lichtquelle (3) ein Diodenlaser oder ein diodengepumpter Festkörperlaser oder eine UV-LED ist. Es ist möglich, dass jede Lichtquelle (3) eine separate Anregungsoptik (6) aufweist, oder dass zwei oder mehr Lichtquellen (3) eine gemeinsame Anregungsoptik (6) besitzen.

In einer bevorzugten Ausführungsform des Aerosolpartikelmessgeräts (20) umfasst das Messgerät (1) zwei oder mehr Lichtquellen (3) und mindestens eine Anregungsoptik (6), wobei
i) zwischen jeder Lichtquelle (3) und dem zu bestimmenden Material (2) eine separate Anregungsoptik (6), und/oder
ii) zwischen zwei oder mehr Lichtquellen (3) und dem zu bestimmenden Material (2) eine gemeinsame Anregungsoptik (6) angeordnet ist,
iii) die Lichtquellen (3) unterschiedliche Modulationsfrequenzen aufweisen, und/oder
iv) die Lichtquellen (3) unterschiedliche Wellenlängen emittieren.

Wenn die Lichtquellen (3) unterschiedliche Modulationsfrequenzen auf weisen, können mindestens zwei Lichtquellen (3) mit der gleichen und/oder mit unterschiedlichen Emissionswellenlängen gleichzeitig aktiv sein. Dadurch sind mindestens zwei Phasenmessungen gleichzeitig möglich, was noch schnellere Messungen ermöglicht.

Die gegebenenfalls unterschiedlich emittierten Wellenlängen der Lichtquellen (3) können eine Wellenlänge von wie beispielsweise 315-380nm (UV-A Bereich), 280-315nm (UV-B Bereich), 100-280nm (UV-C Bereich) sowie 380nm bis 410nm (UV-naher Bereich) aufweisen, wobei auch andere Wellenlängen möglich sind.

Die optionale, jedoch bevorzugte Detektoroptik (7) hat die Aufgabe, das vom zu untersuchenden Material (2) gestreute, reflektierte und/oder emittierte Licht zu bündeln und sehr fokussiert zum Detektor (4) zu senden.

Somit ist die Detektoroptik (7) des Messgeräts (1) vorteilhafterweise zwischen dem zu bestimmenden Material (2) und dem Detektor (4) angeordnet, wobei die Detektoroptik (7) mindestens zwei optische Linsen (9), sowie bevorzugt mindestens einen optischen Filter (10) und/oder mindestens einen Spektralteiler (12), insbesondere einen Interferenzspiegel, ein Prisma, optisches Gitter, Beugungsgitter und/oder Mehrfachspalt, umfasst, wobei der Spektralteiler (12) einen Teil des Lichts, bevorzugt über eine optische Linse (9), zu mindestens einem weiteren Detektor (4) umleitet.

In einer weiteren bevorzugten Ausführungsform des Aerosolpartikelmessgeräts (20) umfasst das Messgerät (1) zwei oder mehr Detektoren (4), wobei zwischen
i) dem zu bestimmenden Material (2) und einem oder mehrerer Detektoren (4) eine separate Detektoroptik (7) angeordnet ist, und/oder
ii) dem zu bestimmenden Material (2) und mehrerer Detektoren (4) nur eine Detektoroptik (7) angeordnet ist, wobei die Detektoroptik (7) für den zweiten und jeden weiteren Detektor (4) einen separaten optischen Filter (12) umfasst.

In einer anderen bevorzugten Ausführungsform des Aerosolpartikelmessgeräts (20) umfasst das Messgerät (1) einen weiteren Reflektor (11) um vom Material (2) kommendes Licht, gegebenenfalls über die Detektoroptik (7), zum Detektor (4) zu reflektieren.

Geeignete Linsen (9) sind dem Fachmann bekannt und kommerziell erhältlich. Nicht-limitierende Beispiele geeigneter Linsen (9) umfassen Achromate, Asphären, plankonvexe Linsen, plankonkave Linsen, doppelkonvexe Linsen, doppelkonkave Linsen, Zylinderlinsen, Kugel- oder Kondensatorlinsen und/oder Fresnellinsen, wobei die Linsen (9) gegebenenfalls mit mindestens einer Antireflexbeschichtung, zum Beispiel für das ultraviolette (UV-), sichtbare (VIS-) und/oder infrarote (IR-) Spektrum versehen sein können.

Geeignete optische Filter (10) sind dem Fachmann bekannt und kommerziell erhältlich. Nicht-limitierende Beispiele geeigneter optische Filter (10) umfassen Bandpassfilter, Langpassfilter, Kurzpassfilter, Notchfilter, Dichroitische Farbfilter, Farbfilter und/oder Spezialfilter, wobei die Filter (10) gegebenenfalls mit mindestens einer Antireflexbeschichtung, zum Beispiel für das ultraviolette (UV-), sichtbare (VIS-) und/oder infrarote (IR-) Spektrum versehen sein können.

Geeignete Reflektoren (11) sind dem Fachmann bekannt und kommerziell erhältlich. Nicht-limitierende Beispiele geeigneter Reflektoren (11) umfassen Planspiegel, Laserspiegel, Off-Axis Parabolspiegel, fokussierende (konkave) Spiegel, elliptische Reflektoren, konkave sphärische Spiegel, Retroreflektoren und/oder Spezialspiegel, wobei die Reflektoren (11) gegebenenfalls mit mindestens einer Beschichtung versehen sein können. Nicht-limitierende, geeignete Beschichtungen filtern unerwünschte Wellenlängen und umfassen beispielsweise Antireflexbeschichtungen, um Wellenlängen des ultravioletten (UV-), sichtbaren (VIS-) und/oder infraroten (IR-) Spektrums weg zu filtern.

Geeignete Spektralteiler (12) sind dem Fachmann bekannt und kommerziell erhältlich. Nicht-limitierende Beispiele geeigneter Spektralteiler (12) umfassen dichroitische Strahlteiler, Prismenstrahlteiler, Prismen, rechtwinklige Prismen, Dispersionsprismen, Pentaprismen, Beugungsgitter, gerillte Beugungsgitter, Transmissionsgitter, reflektierende Beugungsgitter, reflektierende konkave Beugungsgitter und/oder Spezialprismen, wobei die Spektralteiler (12) gegebenenfalls mit mindestens einer Beschichtung versehen sein können, wie zum Beispiel Antireflexbeschichtungen, um Verluste zu reduzieren.

### Messkammer (8)

In der Messkammer (8) des Messgeräts (1) des Aerosolpartikelmessgeräts (20) wird das zu bestimmende Material (2) untersucht, d.h. gemessen. Die Messkammer (8) umschliesst im Wesentlichen den Ort, an welchem das von der Lichtquelle (3) emittierte Licht (31) - und vorteilhafterweise von der Anregungsoptik (6) fokussierte Licht - auf das Material (2) trifft und das vom Material (2) emittierte Licht (31) - typischerweise über die Detektoroptik (7) - zum Detektor (4) weiter geleitet wird.

Die Messkammer (8) weist einen Ein- und Ausgang auf, welche mit dem Aerosol-Einlass (21) resp. dem Aerosol-Auslass (22) des Aerosolpartikelmessgeräts (20) verbunden sind.

Die Messkammer (8) des Aerosolpartikelmessgeräts (20) weist typischerweise eine längliche Form mit konstantem Querschnitt auf, entlang deren Querschnittsmitte die Aerosolpartikel hindurchfliegen, d.h. hindurchgeführt werden. Während des Durchflugs werden sie dann durch das emittierte Licht (31) der Lichtquelle (3) angeregt, wodurch die Fluoreszenz erzeugt wird und anschliessend die Fluoreszenzlebenszeit der Aerosolpartikel im Frequenzbereich gemessen werden kann. Geeignete Messkammern (8) sind dem Fachmann bekannt.

Die Messkammer kann überraschenderweise geringe Ausmasse aufweisen, beispielsweise 5 x 2 x 2 cm³, wobei grössere oder kleinere Ausmasse ebenfalls möglich sind.

Insbesondere bei Aerosolmessungen, bei welchen die einzelnen Aerosolpartikel in einem Gas dispergiert sind wie beispielsweise Blütenpollen in der Luft, erlaubt die Messkammer (8) eine Bündelung, der Aerosolpartikel auf den Ort, wo das fokussierte emittierte Licht (31) auf das Material (2), d.h. die Aerosolpartikel, trifft.

Die Lichtquelle (3), der Detektor (4), die optionale Anregungsoptik (6), die optionale Detektoroptik (7) sowie die Elektronik (23) des Aerosolpartikelmessgeräts (20) kann innerhalb und/oder ausserhalb der Messkammer (8) angeordnet sein.

In einer bevorzugten Ausführungsform des Aerosolpartikelmessgeräts (20) ist das zu bestimmende Material (2) innerhalb der Messkammer (8) und mindestens eine Lichtquelle (3), mindestens ein Detektor (4) und/oder mindestens ein Reflektor (11) ist ausserhalb der Messkammer (8) angeordnet, wobei das Licht (31) durch eine optische Linse (9) und/oder ein Fenster (13) in die Messkammer ein- und/oder austritt, wobei gegebenenfalls die Anregungsoptik (6) und/oder die Detektoroptik (7) innerhalb und/oder ausserhalb der Messkammer (8) angeordnet sein können. Dabei ist es oft besonders bevorzugt, wenn alle vorhandenen Lichtquellen (3), Detektoren (4) und gegebenenfalls die Reflektoren (11) ausserhalb der Messkammer (8) angeordnet sind.

Geeignete Fenster (13) sind dem Fachmann bekannt und kommerziell erhältlich. Nicht-limitierende Beispiele geeigneter Fenster (13) umfassen Fenster aus optischem Glas, Quarzglas, Fluor-Kronglas, Kronglas, Borosilikat-Kronglas, ZERODUR^{®}, Barium-Kronglas, Leichtflintglas, Schwerkronglas, Flintglas, Schwerflintglas oder Lanthan-Schwerflintglas, wobei die Fenster (13) gegebenenfalls mit einer oder mehreren Beschichtungen versehen sein können, zum Beispiel um Wellenlängen des ultravioletten (UV-), sichtbaren (VIS-) und/oder infraroten (IR-) Spektrums weg zu filtern.

### Detektorbaugruppe (40)

In einer bevorzugten Ausführungsform ist der Detektor (4) des Messgeräts (1) ein Silicon Photomultiplier (SiPM) und in einer Detektorbaugruppe (40) angeordnet. Dabei umfasst die Detektorbaugruppe (40) ein Gehäuse (41) mit optischem Element (42), den Detektor (4), einen Temperaturfühler (43), ein Kühlelement (44) sowie eine flexible oder starre Leiterplatte zur elektrischen Kontaktierung (45).

Vorteilhafterweise umfasst die Detektorbaugruppe (40) ein Silicon Photomultiplier (SiPM) mit einer Bauform, welche für die Oberflächenmontage geeignet ist. Somit weist er typischerweise keine Anschlussdrähte oder Anschlussbeine zur elektrischen Kontaktierung auf.

Das Gehäuse (41) der Detektorbaugruppe (40) bildet vorteilhafterweise die äussere Hülle der Detektorbaugruppe (40) und schützt somit das darin sorgfältig angeordnete optische Element (42), den Detektor (4), den Temperaturfühler (43) sowie die Leiterplatte (45) vor störenden Effekten. Dabei ist es oft hilfreich, wenn das Kühlelement (44) sowohl innerhalb als auch ausserhalb des Gehäuses (41) angeordnet ist, oder zumindest mit dem inneren als auch dem äusseren Bereich des Gehäuses (41) Kontakt hat. Dem Fachmann sind geeignete Gehäuse (41) bekannt. Auch kann er ohne erfinderische Tätigkeit ein geeignetes Gehäuse (41) erstellen.

Das optische Element (42) der Detektorbaugruppe (40) umfasst bevorzugt eine optische Linse (9), einen optischen Filter (10) und/oder ein Fenster (13).

Geeignete Temperaturfühler (43) und Leiterplatten zur elektrischen Kontaktierung (45) der Detektorbaugruppe (40) sind dem Fachmann bekannt und kommerziell erhältlich.

Um das Signal-zu-Rausch Verhältnis des Detektors (4) zu erhöhen, ist es oft vorteilhaft, wenn der Detektor (4) gekühlt wird, typischerweise auf eine Temperatur von etwa -20°C bis etwa 10°C. Das Kühlen erfolgt bevorzugt mit dem Kühlelement (44) der Detektorbaugruppe (40). Geeignete Kühlelemente sind dem Fachmann bekannt. Bevorzugt sind insbesondere ein oder mehrere Peltier-Elemente und/oder Passiv-Kühlkörper. Das Peltier-Element ist bevorzugt an der Leiterplatte zur elektrischen Kontaktierung (45) angebracht und/oder weist einen flächigen Kontakt mit dem Detektor und/oder der Aussenseite des Gehäuses (41) auf.

### Digitale Holographie (26) und zeitaufgelöste Streulichtmessung (27)

In einer bevorzugten Ausführungsform umfasst das Aerosolpartikelmessgerät (20) neben dem Messgerät (1) für die Fluoreszenzlebenszeit Messung zusätzlich mindestens eine Baugruppe für die digitale Holographie (26) und/oder mindestens eine Baugruppe für zeitaufgelöste Streulichtmessung (27), wobei die Streulichtmessung (27) gegebenenfalls zusätzlich mit einer Polarisationsmessung ergänzt sein kann. Diese Baugruppen können Teil des Messgeräts (1) sein oder als separate Baugruppen im Aerosolpartikelmessgerät (20) angeordnet sein. Mit diesen Baugruppen kann das Material (2) ebenfalls in Echtzeit qualitativ und/oder quantitativ bestimmt werden. Dabei werden zusätzliche Informationen gewonnen, wodurch eine wesentlich grössere Anzahl Materialien (2) bestimmt werden kann. Zudem kann durch den Einsatz mindestens einer solchen Baugruppe die Wahrscheinlichkeit einer korrekten Bestimmung von unterschiedlichen Materialien (2) deutlich erhöht werden.

Als Baugruppe für die digitale Holographie (26) wird typischerweise ein optisches Setup gemäss In-Line resp. Gabor Verfahren verwendet. Dabei wird kohärentes Licht von einer Lichtquelle - gegebenenfalls durch Linsen gebündelt - durch Fenster an der Wand der Messkammer (8) durch die Messkammer (8) zu einem gegenüberliegenden Detektor geleitet, wobei Fenster auch durch Linsen ersetzt werden können. In der Messkammer (8) tritt das Licht auf die zu untersuchenden, vorbeifliegenden Aerosolpartikel des Aerosols, wobei ein Teil des Lichts am Aerosolpartikel gebeugt wird. Dieses durch die Aerosolpartikel beeinflusste Licht überlagert sich mit dem kohärenten Hintergrundlicht der Lichtquelle und wird gemeinsam vom gegenüberliegenden bildgebenden Detektor detektiert. Dieser liefert ein Hologramm des zu untersuchenden Aerosolpartikels, was zu einer zusätzlichen, bildgebenden Charakterisierung der Aerosolpartikel führt. Dabei kann die Baugruppe für digitale Holographie (26) eine oder mehrere In-Line Anordnungen aufweisen. Ein Teil des auf die Aerosolpartikel treffenden Lichts wird gestreut und von einem Trigger-Empfänger detektiert. Dieser steuert den Aufnahmezeitpunkt des bildgebenden Detektors.

Anhand der Baugruppe für zeitaufgelöste Streulichtmessung (27) wird Licht einer Lichtquelle, sogenanntes Anregungslicht, mit einer Linse kollimiert, d.h. gebündelt, und durch ein Fenster parallel zur Achse der Aerosolflusses mit grösseren Aerosolpartikeln in den Messkanal geleitet, wodurch die Partikel über eine längere Strecke im Messkanal vom Anregungslichtstrahl ausgeleuchtet werden. Das Anregungslicht kann auch durch ein seitliches Fenster oder eine Linse in den Messkanal geleitet werden und ein Spiegel im Messkanal lenkt das Licht um 90° gegen oder in die Flugrichtung der Aerosolpartikel ab, wodurch die Aerosolpartikel im Vorbeiflug vom Anregungslichtstrahl ausgeleuchtet werden. Dabei entsteht Streulicht, wobei ein Teil des Streulichts durch ein weiteres Fenster in der Wand der Messkammer (8) seitlich aus der Messkammer (8) tritt. Das Fenster kann gegebenenfalls so geformt sein, dass es die Funktion der Kollimations-Linse übernimmt oder das ausgetretene Streulicht wird mit einer Linse kollimiert und gegebenenfalls, d.h. falls mit einer Polarisationsmessung ergänzt, mittels Polarisationsfilter in Licht mit vertikaler und horizontaler Polarisation aufgetrennt, wobei ein polarisierter Lichtstrahl um 90° abgelenkt wird. Die beiden polarisierten Lichtstrahlen werden mit einer weiteren Linse auf je einen Empfänger fokussiert und detektiert. Dadurch werden für jede Polarisation des Lichts Streulicht-Intensitätsprofile des Partikels im Vorbeiflug gemessen, welche charakteristisch für das Aerosolpartikel sind.

Die Methoden der digitalen Holographie und der zeitaufgelösten Streulichtmessung mit und ohne Polarisationsmessung sind dem Fachmann bekannt. Er kennt auch geeignete Baugruppen für die digitale Holographie (26) und für die zeitaufgelöste Streulichtmessung (27) mit und ohne Polarisationsmessung, die im Handel erhältlich sind oder welche er ohne unzumutbaren Aufwand und ohne erfinderische Tätigkeit zusammen bauen kann.

### Aerosolpartikelmessgerät (20)

Das erfindungsgemässe Aerosolpartikelmessgerät (20) umfasst das Messgerät (1) mit Lichtquelle (3), Detektor (4) und Messkammer (8), sowie einen Aerosol-Einlass (21), einen Aerosol-Auslass (22), eine Luftflusserzeugungs- und Steuervorrichtung mit Elektronik (23), und ist insbesondere geeignet zur qualitativen und/oder quantitativen Bestimmung von fluoreszierenden Materialien (2) in Echtzeit mittels Fluoreszenzlebenszeit Messung im Frequenzbereich wobei die Materialien (2) Aerosolpartikel eines Aerosols, insbesondere in Luft dispergierte Bioaerosolpartikel wie Pollen und/oder Schimmelpilzsporen, darstellen.

Der Aerosol-Einlass (21), d.h. der Einlass oder Eingang des Aerosols in die Messkammer (8), sowie der Aerosol-Auslass (22), d.h. der Auslass oder Ausgang des Aerosols aus der Messkammer (8) hinaus, sind dem Fachmann bekannt. Er kann auch die für das jeweilig geeignete Aerosolpartikelmessgerät (20) optimale Form bestimmen.

Die Luftflusserzeugungs- und Steuervorrichtung mit Elektronik (23) des Aerosolpartikelmessgeräts (20) veranlasst, dass Aerosole, typischerweise Luft mit den zu untersuchenden Materialien (2), d.h. Aerosolpartikeln, durch den Aerosol-Einlass (21) in die Messkammer (8) hinein, entlang der Messkammer (8) zum Aerosol-Auslass (22) und somit wieder aus der Messkammer (8) heraus befördert werden. Das Aerosolpartikelmessgerät (20) kann eine oder mehrere Luftflusserzeugungs- und Steuervorrichtungen mit Elektronik (23) aufweisen. Bevorzugt wird sie im Bereich des Aerosol-Einlasses (21) und/oder des Aerosol-Auslasses (22) der Messkammer (8) angeordnet, kann aber auch im Bereich des Aerosol-Einlasses (21) und/oder des Partikelkonzentrators (24) angeordnet sein. Geeignete Luftflusserzeugungs- und Steuervorrichtungen (23) sind dem Fachmann bekannt.

Die Elektronik der Luftflusserzeugungs- und Steuervorrichtung (23) dient somit bevorzugt zur Ansteuerung der Sensoren und Steuerelemente zur Regulierung und Steuerung des Luftstroms und somit der Aerosolpartikel, welche durch die Messkammer (8) des Aerosolpartikelmessgeräts (20) gefördert werden.

Die Luftflusserzeugungs- und Steuervorrichtung (23) umfasst insbesondere eine Pumpe, Düse und Steuerelemente sowie typischerweise mindestens einen Sensor, insbesondere einen Luftgeschwindigkeitssensor, Strömungssensor, Durchflusssensor, Luftdrucksensor und/oder Differenzdrucksensor. Mit der Luftflusserzeugungs- und Steuervorrichtung mit Elektronik (23) lässt sich die Luftströmung steuern und/oder regeln.

Das Aerosolpartikelmessgerät (20) umfasst zudem vorteilhafterweise einen Partikelkonzentrator (24), einen Partikelkollektor (25) sowie eine Partikel-Fokussier-Düse (28).

Der Partikelkonzentrator (24) des Aerosolpartikelmessgeräts (20) ist optional, jedoch oft bevorzugt. Er ermöglicht das Aufkonzentrieren der Aerosolpartikel im Aerosol, sodass schnellere Messungen möglich sind, da pro gemessene Zeiteinheit eine grössere Anzahl an Aerosolpartikeln untersucht werden kann und somit mehr Messwerte pro Zeiteinheit zur Verfügung stehen. So können kleine Partikelkonzentrationen in kürzerer Zeit bzw. mit höherer Genauigkeit ermittelt werden.

Geeignete Partikelkonzentratoren (24) umfassen virtuelle Impaktoren sowie Zyklone. Sie sind dem Fachmann bekannt und kommerziell erhältlich.

Der Partikelkollektor (25) des Aerosolpartikelmessgeräts (20) ist optional und erlaubt das Abscheiden, d.h. Sammeln, der durch die Messkammer (8) des Aerosolpartikelmessgeräts (20) transportierten Aerosolpartikel. Dies kann hilfreich sein, wenn die mit Fluoreszenzmessung untersuchten Aerosolpartikel nachträglich noch zusätzlich untersucht werden sollen, beispielsweise für eine Doppelbestimmung und/oder Mikroskopie.

Weist das Aerosolpartikelmessgerät (20) ein Partikelkollektor (25) auf, tritt beim Aerosol-Auslass (22) kein oder nur ein Teil der durch die Messkammer (8) geführten Aerosolpartikel aus.

Geeignete Partikelkollektoren (25) sind dem Fachmann bekannt und kommerziell erhältlich.

Die mindestens eine Partikel-Fokussier-Düse (28) des Aerosolpartikelmessgeräts (20) ist optional, jedoch oft bevorzugt. Sie ermöglicht das Bündeln der Aerosolpartikel im Aerosol in der Trajektorie der Messkammer (8), sodass im Idealfall alle, oder zumindest ein möglichst grosser Anteil, der Aerosolpartikel in der Messkammer gemessen werden kann. Die Partikel-Fokussier-Düse (28) ist bevorzugt zwischen dem Aerosol-Einlass (21) oder dem Partikelkonzentrator (24) und der Messkammer (8) angeordnet. Geeignete Partikel-Fokussier-Düsen (28) sind dem Fachmann bekannt.

In einer bevorzugten Ausführungsform weist das Aerosolpartikelmessgerät (20)
i) mindestens einen Partikelkonzentrator (24) auf zum Aufkonzentrieren der Aerosolpartikel im Aerosol, wobei der Partikelkonzentrator (24) ein virtueller Impaktor und/oder ein Zyklon sein kann, und/oder umfasst,
ii) gegebenenfalls einen Partikelkollektor (25) zum Sammeln der gemessenen Materialien (2),
iii) mindestens eine Partikel-Fokussier-Düse (28) auf um die Aerosolpartikel im Aerosol in der Trajektorie der Messkammer (8) zu bündeln,
iv) mindestens eine Baugruppe für digitale Holographie (26) auf,
v) mindestens eine Baugruppe für zeitaufgelöste Streulichtmessung (27) zur qualitativen und/oder quantitativen Bestimmung in Echtzeit des Materials (2), wobei die Streulichtmessung gegebenenfalls eine Polarisationsmessung aufweisen kann, und/oder
vi) eine weitere Lichtquelle (3'), insbesondere einen Laser, deren emittiertes Licht (31') in Form eines Lichtstrahls entlang der Trajektorie der Messkammer (8) verläuft. Ein solcher Laser kann beispielsweise im Aerosol-Einlass (21) angeordnet sein.

Die aufgeführten Ergänzungen i) bis v) können alleine und/oder in beliebiger Kombination im Aerosolpartikelmessgerät (20) eingebaut werden und erhöhen die Anzahl verschiedener detektierbarer Aerosolpartikel sowie die Messgenauigkeit des Aerosolpartikelmessgeräts (20).

### Verfahren

Das erfindungsgemässe Verfahren erlaubt überraschenderweise eine qualitative und/oder quantitative Bestimmung von fluoreszierenden Materialien (2) in Echtzeit mittels Fluoreszenzlebenszeit Messung mit dem erfindungsgemässen Aerosolpartikelmessgerät (20) umfassend das Messgerät (1). Dabei wird die Fluoreszenzlebenszeit Messung im Frequenzbereich durchgeführt wird und dass das von der Lichtquelle (3) emittierte Licht (31) intensitätsmoduliert wird. Als Lichtquelle (3) wird mindestens ein Diodenlaser, insbesondere ein UV-Diodenlaser, ein diodengepumpter Festkörperlaser, und/oder eine LED eingesetzt. Die Materialien (2), in Form von Aerosolpartikel eines Aerosols, werden in der Messkammer (8) des Messgeräts (1) - und somit im Aerosolmessgerät (20) gemessen. Dabei werden die Aerosolpartikel in der Messkammer (8) dem Licht (31) der Lichtquelle (3) ausgesetzt, wobei die Aerosolpartikel das Licht absorbieren und teilweise wieder emittieren. Das emittierte Licht wird mit dem Detektor (4) detektiert, wobei als Detektor (4) ein auf Halbleitertechnologie basierter elektronischer Photonendetektor zur Lichtdetektion, insbesondere ein Silicon Photomultiplier (SiPM) eingesetzt wird. Anschliessend werden die erhaltenen Daten mit einem Datenverarbeitungsprogramm verarbeitet.

In einer bevorzugten Ausführungsform des erfindungsgemässen Verfahrens
- wird das Aerosol mittels einer Luftflusserzeugungs- und Steuervorrichtung (23) in die Messkammer (8) hinein- und wieder herausgefördert, und
- werden die Aerosolpartikel, d.h. das Material (2), des Aerosols in der Messkammer (8) im Flug und in Echtzeit mit dem Messgerät (1) qualitativ und/oder quantitativ bestimmt, sowie
- werden gegebenenfalls
   i) die Aerosolpartikel im Aerosol in mindestens einem Partikelkonzentrator (24) aufkonzentriert, wobei der Partikelkonzentrator (24) mindestens einen virtuellen Impaktor und/oder mindestens einen Zyklon umfasst, wobei der Schritt des Aufkonzentrierens bevorzugt vor der Fluoreszenzlebenszeit Messung erfolgt, und/oder
   ii) werden gegebenenfalls die Aerosolpartikel im Aerosol mit mindestens einer Partikel-Fokussier-Düse (28) in der Trajektorie der Messkammer (8) gebündelt.

### Verwendung

Das erfindungsgemässe Aerosolpartikelmessgerät (20) und das erfindungsgemässe Verfahren können überraschenderweise sehr vielseitig verwendet werden. Sie eignen sich hervorragend zur qualitativen und/oder quantitativen Bestimmung mittels Fluoreszenzlebenszeit Messung im Frequenzbereich, und insbesondere in Echtzeit, von fluoreszierenden Materialien (2) in Form von Aerosolpartikel eines Aerosols, d.h. von in einer Gasphase dispergierten Aerosolpartikel, insbesondere in der Luft schwebende Pollen und/oder Sporen, sowie in der Verfahrenstechnik, beispielsweise zur Prozess- und/oder Qualitätskontrolle von Materialien (2).

Die erfindungsgemässe Verwendung des erfindungsgemässen Aerosolpartikelmessgeräts (20) erlaubt die direkte Messung von in der Gasphase dispergierten Aerosolpartikeln, und somit von Aerosolpartikeln im Flug. Denn durch die Bestimmung der Fluoreszenzlebenszeit werden zusätzliche Information zur chemischen Zusammensetzung des Partikels verfügbar, wodurch die korrekte Identifikation des Partikels deutlich verbessert wird. Durch die erfindungsgemässe Verwendung des Aerosolpartikelmessgeräts (20) wird so eine Partikelerkennung in Echtzeit ermöglicht, wodurch eine permanente Überwachung von Materialien (2), insbesondere Partikeln in Gasen und in Echtzeit ermöglicht wird.

Es werden folgende Bezugszeichen verwendet:
- 1: Messgerät
- 2: fluoreszierende Materialien
- 3: Lichtquelle
- 3': weitere Lichtquelle
- 4: Detektor
- 6: Anregungsoptik
- 7: Detektoroptik
- 8: Messkammer
- 9: optische Linse
- 10: optischer Filter
- 11: Reflektor
- 12: Spektralteiler
- 13: Fenster
- 20: Aerosolpartikelmessgerät
- 21: Aerosol-Einlass
- 22: Aerosol-Auslass
- 23: Luftflusserzeugungs- und Steuervorrichtung mit Elektronik
- 24: Partikelkonzentrator
- 25: Partikelkollektor
- 26: digitale Holographie
- 27: zeitaufgelöste Streulichtmessung
- 28: Partikel-Fokussier-Düse
- 31: emittiertes Licht der Lichtquelle (3)
- 31': emittiertes Licht der Lichtquelle (3')
- 40: Detektorbaugruppe
- 41: Gehäuse der Detektorbaugruppe (40)
- 42: optisches Element
- 43: Temperaturfühler
- 44: Kühlelement
- 45: Trägermaterial zur elektrischen Kontaktierung

Im Folgenden werden nicht-limitierende, bevorzugte Ausführungsformen des erfindungsgemässen Aerosolpartikelmessgeräts (20) und des Messgeräts (1) anhand der nachfolgenden Zeichnungen beschrieben. Diese sind nicht einschränkend auszulegen und werden als Bestandteil der Beschreibung verstanden:

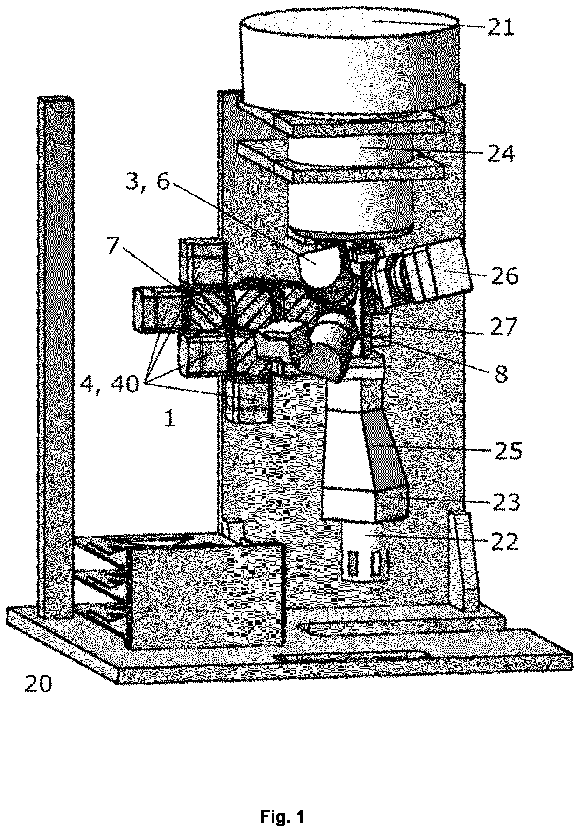

- Fig. 1: zeigt die Aussenansicht eines beispielhaft dargestellten erfindungsgemässen Aerosolpartikelmessgeräts (20) umfassend den Aerosol-Einlass (21), den Partikelkonzentrator (24), das erfindungsgemässe Messgerät (1), den Partikelkollektor (25) die Luftflusserzeugungs- und Steuervorrichtung mit Elektronik (23) und den Aerosol-Auslass (22), wobei der Partikelkonzentrator (24) zwischen zwei Halteplatten angeordnet ist.
Das dargestellte Aerosolpartikelmessgerät (20) mit dem Messgerät (1) ist in einem lichtundurchlässigen Gehäuse angeordnet, wobei dieses in Fig. 1 aufgrund der Übersichtlichkeit weggelassen wurde. Das im Aerosolpartikelmessgerät (20) dargestellte Messgerät (1) zeigt die Lichtquelle (3) mit der Anregungsoptik (6) und vier Detektorbaugruppen (40) mit dem Detektor (4). Zwischen der Detektorbaugruppe (40) und der Messkammer (8) befindet sich jeweils die (schraffiert dargestellte) Detektoroptik für die Detektoren (7), das Aerosolpartikelmessgerät (20) und das Messgerät (1) umfassen zudem ein Programm zur Datenverarbeitung, sowie eine Elektronik zur Gerätesteuerung, Signalmessung, Signalaufbereitung, Signalauswertung und zur Datenspeicherung, wobei die Elektronik und das Programm zur Datenverarbeitung typischerweise bei den erwähnten Bauteilen und/oder in einem separaten Elektronik-Bauteil angeordnet ist. Im Bereich der Messkammer (8) des Messgeräts (1) - und somit des Aerosolpartikelmessgeräts (20) sind zudem beispielhaft eine Baugruppe für digitale Holographie (26) und eine Baugruppe für zeitaufgelöste Streulichtmessung (27), gegebenenfalls mit zusätzlicher Polarisationsmessung, zur qualitativen und/oder quantitativen Bestimmung des Materials (2) in Echtzeit angeordnet.

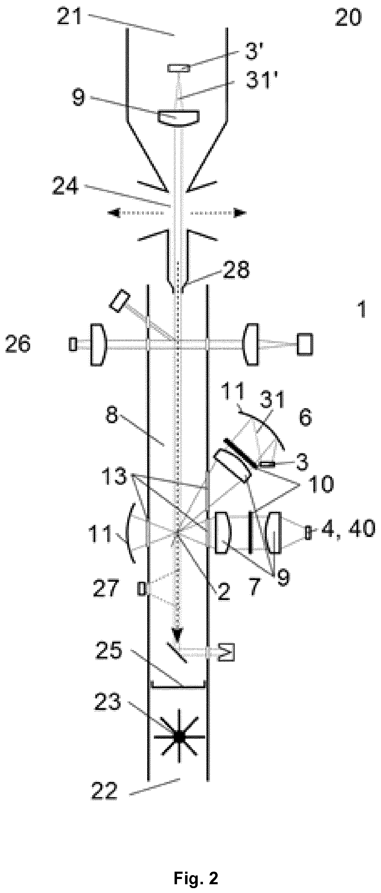

- Fig. 2: zeigt beispielhaft eine schematische Darstellung des erfindungsgemässen Aerosolpartikelmessgeräts (20) mit dem im mittleren Bereich der Messkammer (8) dargestellten Messgerät (1).
Das Messgerät (1) umfasst in der dargestellten Ausführungsform eine Anregungsoptik (6) und eine Detektoroptik (7). Die Lichtquelle (3) der Anregungsoptik (6) emittiert Licht in Richtung eines Reflektors (11). Dort wird das emittierte Licht (31) reflektiert und gebündelt, d.h. kollimiert, zum optischen Filter (10) und zur optischen Linse (9) weiter geleitet, von wo es durch die Linse (9) durch ein Fenster (13) in die Mitte der Messkammer (8) fokussiert wird, wo das Licht (31) auf das Material (2), d.h. beim Aerosolpartikelmessgerät (2) auf vorbeifliegende Aerosolpartikel trifft. Dabei dient das Fenster (13) als Abgrenzung der Messkammer (8) zum äusseren Bereich des Messgeräts (1). Die schematische Darstellung des Aerosolpartikelmessgeräts (20) umfasst im oberen Bereich zudem einen Aerosol-Einlass (21) und einen optionalen Partikelkonzentrator (24), beispielsweise ein Zyklon und/oder virtueller Impaktor, anhand dessen Aerosolpartikel aufkonzentriert in die Messkammer (8) geführt werden und das überflüssige Gas, beispielsweise abgesonderte Luft, seitlich aus dem Aerosolpartikelmessgerät (20) entweichen kann. Mittels der optionalen, jedoch bevorzugten, Partikel-Fokussier-Düse (28), die typischerweise eine optimierte, dem Fachmann bekannte Geometrie aufweist und beispielhaft zwischen dem Partikelkonzentrator 24 und der Messkammer (8) angeordnet ist, können die Aerosolpartikel sehr stark gebündelt durch die Mitte der Messkammer (8) befördert werden. Entlang der Messkammer (8) sind beispielhaft und in beliebiger Reihenfolge auch die optionalen Baugruppen für digitale Holographie (26) und zeitaufgelöste Streulichtmessung (27), gegebenenfalls mit zusätzlicher Polarisationsmessung, angeordnet, die weitere, zusätzliche Informationen liefern, um die Bestimmungssicherheit der zu untersuchenden Materialien und die Anzahl der Materialarten, beispielsweise die Anzahl der identifizierbaren Pollenarten, weiter zu erhöhen. Im Endbereich der Messkammer (8) - hier im unteren Teil der Darstellung gezeigt - ist ein optionaler Partikelkollektor (25) dargestellt, wo die Aerosolpartikel gesammelt werden können. Die Luftflusserzeugungs- und Steuervorrichtung mit Elektronik (23), die beispielsweise eine Saugpumpe umfassen kann, welche veranlasst, dass das Aerosol in den Aerosol-Einlass (21), durch die Messkammer (8) hindurch zum Aerosol-Auslass (22) strömt, ist beispielhaft im Bereich des Aerosol Auslasses (22) dargestellt. Zudem ist im Bereich des Aerosol-Einlasses (21) beispielhaft eine optionale weitere Lichtquelle (3') dargestellt, wobei die weitere Lichtquelle (3') bevorzugt ein Laser ist. Das von der Lichtquelle (3') emittierte Licht (31') wird typischerweise zu einer optischen Linse (9) und anschliessend in Form eines kollimierten Lichtstrahls zusammen mit den Aerosolpartikeln entlang ihrer Trajektorie durch die Messkammer (8) in Richtung Aerosol-Auslass (22) gerichtet.

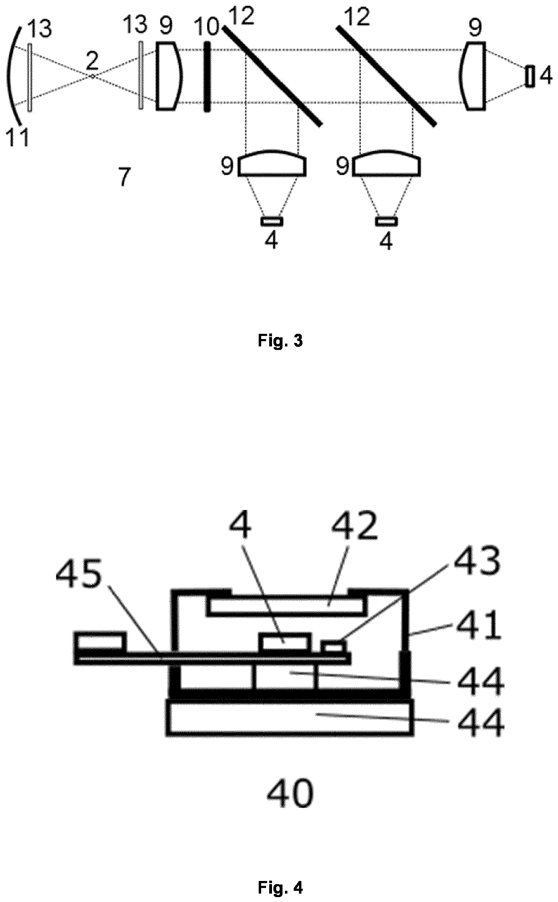

- Fig. 3: zeigt beispielhaft einen schematischen Aufbau einer Detektoroptik (7) des Messgeräts (1), die zwischen dem Material (2) und einem oder mehreren Detektoren (4) oder Detektorbaugruppen (40) angeordnet ist, und die optischen Linsen (9), einen optischen Filter (10) sowie die Spektralteiler (12) umfasst.
Das vom Material (2) emittierte Licht, inklusive dem vom Material (2) emittierten Fluoreszenz-Licht, führt durch ein Fenster (13), das als Abgrenzung der Messkammer (8) zum äusseren Bereich des Messgeräts (1) dient, zu einer ersten optischen Linse (9), welche das Licht kollimiert zu einem optischen Filter (10) weiter leitet, wobei auch mehr als ein Filter (10) hintereinander angeordnet werden kann. Der oder die Filter (10) filtern störendes Licht und unterdrücken damit nicht erwünschte spektrale Anteile des Lichts, wodurch nur das Licht mit für die Messung relevanter Wellenlänge in Richtung Detektoren (4) durchgelassen wird. Die zwischen dem Filter (10) und den Linsen (9) angeordneten Spektralteiler (12) teilen das zu analysierende Licht in jeweils zwei spektrale Wellenlängenbereiche auf, wobei ein spektraler Bereich des Lichts umgelenkt und der andere Bereich durch den Spektralteiler (12) hindurch gelassen wird. Nach dem Spektralteiler (12) wird das Licht durch eine weitere Linse (9) zum Detektor (4) geführt. Ein anderer Teil des vom Material (2) emittierten Lichts gelangt, beispielsweise durch ein Fenster (13), zum Reflektor (11), welcher - in Bezug auf das Material (2) - der Detektoroptik (7) gegenüber angeordnet ist. Dabei ist der Reflektor (11) vorteilhafterweise so angeordnet, dass ein möglichst grosser Anteil des vom Material (2) reflektierten Lichts durch den Reflektor (11) zurück zur Detektoroptik (7) reflektiert wird, wo es weiter zu den Detektoren (4) gelangt und ausgewertet werden kann.
- Fig. 4: zeigt beispielhaft einen schematischen mechanischen Aufbau einer Detektorbaugruppe (40). Der Detektor (4) ist auf einem Trägermaterial zur elektrischen Kontaktierung (45) angebracht, beispielsweise gelötet. Neben dem Detektor (4) ist ein Element zur Temperaturmessung, d.h. ein Temperaturfühler (43), montiert. Zwischen der dem Detektor (4) entgegengesetzten Fläche des Trägermaterials (45) und des Gehäuses (41) befindet sich ein Teil des Kühlelements (44), welches zur Kühlung des Detektors (4) dient. Der andere Teil des Kühlelements (44) ist auf der gegenüberliegenden Seite des Gehäuses (41) angeordnet, wobei beide Teile des Kühlelements (44) typischerweise miteinander verbunden sind. Auf der Seite des Gehäuses (41), die dem Kühlelement (44) entgegengesetzt ist und zum Detektor (4) gewandt ist, ist ein optisches Element (42) angeordnet. Das optische Element (42) ist bevorzugt eine optische Linse (9), ein optischer Filter (10) oder ein Fenster (13). Ausserhalb des Gehäuses der Detektorbaugruppe (41) ist auf dem Trägermaterial zur elektrischen Kontaktierung (45) ein Stecker angeordnet.

## Patentansprüche

1. Aerosolpartikelmessgerät (20) zur qualitativen und/oder quantitativen Bestimmung von fluoreszierenden Materialien (2) in Echtzeit mittels Fluoreszenzlebenszeit Messung im Frequenzbereich umfassend ein Messgerät (1) mit Lichtquelle (3), Detektor (4) und Messkammer (8), einen Aerosol-Einlass (21), einen Aerosol-Auslass (22) sowie eine Luftflusserzeugungs- und Steuervorrichtung mit Elektronik (23) umfasst, **dadurch gekennzeichnet, dass**
i) der Detektor (4) ein auf Halbleitertechnologie basierter elektronischer Photonendetektor zur Lichtdetektion, insbesondere ein Silicon Photomultiplier (SiPM), ist, und
ii) die Materialien (2) Aerosolpartikel eines Aerosols und somit in einer Gasphase dispergiert sind, wodurch die Aerosolpartikel im Flug bestimmt werden, was eine permanente Überwachung von Partikeln in Gasen und in Echtzeit ermöglicht.

2. Aerosolpartikelmessgerät (20) nach Anspruch 1, **dadurch gekennzeichnet, dass** das von der Lichtquelle (3) emittierte Licht (31) intensitätsmoduliert, insbesondere sinusförmig intensitätsmoduliert, ist und/oder die Lichtquelle (3) ein Diodenlaser, eine LED und/oder ein diodengepumpter Festkörperlaser ist.

3. Aerosolpartikelmessgerät (20) nach Anspruch 1 oder 2, **dadurch gekennzeichnet, dass** die Materialien (2) in Form von Aerosolpartikel eines Aerosols fluoreszierende organische und/oder anorganische reine Stoffe oder Gemische sind und in Form eines Feststoffs, einer Flüssigkeit, einer Dispersion, einer Suspension, einer Paste, und/oder in Form von in Luft dispergierten Bioaerosolpartikel wie Pollen, Blütenstaub, Sporen, Pilzsporen, Pflanzensporen, Proteine, DNA, RNA, Organismen, Gewebe, Zellen, Bakterien, Viren, und/oder Mineralien, vorliegen und gegebenenfalls vorgängig mit einem Fluorophor behandelt worden sind.

4. Aerosolpartikelmessgerät (20) nach mindestens einem der Ansprüche 1 bis 3, **dadurch gekennzeichnet, dass** das Messgerät (1) mindestens eine Anregungsoptik (6), mindestens eine Detektoroptik (7), eine Messkammer (8), ein Programm zur Datenverarbeitung, ein lichtundurchlässiges Gehäuse sowie eine Elektronik zur Gerätesteuerung, Signalmessung, Signalaufbereitung, Signalauswertung und zur Datenspeicherung umfasst.

5. Aerosolpartikelmessgerät (20) nach mindestens einem der Ansprüche 1 bis 4, **dadurch gekennzeichnet, dass** das Aerosolpartikelmessgerät (20) eine Baugruppe für digitale Holographie (26) und/oder eine Baugruppe für zeitaufgelöste Streulichtmessung (27), gegebenenfalls mit zusätzlicher Polarisationsmessung, zur qualitativen und/oder quantitativen Bestimmung des Materials (2) in Echtzeit umfasst.

6. Aerosolpartikelmessgerät (20) nach mindestens einem der Ansprüche 1 bis 5, **dadurch gekennzeichnet, dass** die Anregungsoptik (6) zwischen der Lichtquelle (3) und dem zu bestimmenden Material (2) und/oder die Detektoroptik (7) zwischen dem zu bestimmenden Material (2) und dem Detektor (4) angeordnet sind, wobei
i) die Anregungsoptik (6) mindestens eine optische Linse (9) und bevorzugt mindestens einen optischen Filter (10), sowie gegebenenfalls mindestens einen Reflektor (11), und/oder
ii) die Detektoroptik (7) mindestens zwei optische Linsen (9), sowie bevorzugt mindestens einen optischen Filter (10) und/oder mindestens einen Spektralteiler (12), insbesondere einen Interferenzspiegel, ein Prisma, optisches Gitter, Beugungsgitter und/oder Mehrfachspalt, umfasst, wobei der Spektralteiler (12) einen Teil des Lichts, bevorzugt über eine optische Linse (9), zu mindestens einem weiteren Detektor (4) umleitet.

7. Aerosolpartikelmessgerät (20) nach mindestens einem der Ansprüche 1 bis 6, **dadurch gekennzeichnet, dass** das Messgerät (1) zwei oder mehr Lichtquellen (3) und mindestens eine Anregungsoptik (6) umfasst, wobei
i) zwischen jeder Lichtquelle (3) und dem zu bestimmenden Material (2) eine separate Anregungsoptik (6), und/oder
ii) zwischen zwei oder mehr Lichtquellen (3) und dem zu bestimmenden Material (2) eine gemeinsame Anregungsoptik (6) angeordnet ist,
iii) die Lichtquellen (3) unterschiedliche Modulationsfrequenzen aufweisen, und/oder
iv) die Lichtquellen (3) unterschiedliche Wellenlängen emittieren.

8. Aerosolpartikelmessgerät (20) nach mindestens einem der Ansprüche 1 bis 7, **dadurch gekennzeichnet, dass** das Messgerät (1) zwei oder mehr Detektoren (4) umfasst, wobei zwischen
i) dem zu bestimmenden Material (2) und einem oder mehrerer Detektoren (4) eine separate Detektoroptik (7) angeordnet ist, und/oder
ii) dem zu bestimmenden Material (2) und mehrerer Detektoren (4) nur eine Detektoroptik (7) angeordnet ist, wobei die Detektoroptik (7) für den zweiten und jeden weiteren Detektor (4) einen separaten optischen Filter (12) umfasst.

9. Aerosolpartikelmessgerät (20) nach mindestens einem der Ansprüche 1 bis 8, **dadurch gekennzeichnet, dass** das Messgerät (1) einen weiteren Reflektor (11) umfasst um vom Material (2) kommendes Licht, gegebenenfalls über die Detektoroptik (7), zum Detektor (4) zu reflektieren.

10. Aerosolpartikelmessgerät (20) nach mindestens einem der Ansprüche 1 bis 9, **dadurch gekennzeichnet, dass** das zu bestimmende Material (2) innerhalb der Messkammer (8) angeordnet ist und mindestens eine Lichtquelle (3), mindestens ein Detektor (4) und/oder mindestens ein Reflektor (11) ausserhalb der Messkammer (8) angeordnet ist, wobei das Licht (31) durch eine optische Linse (9) und/oder ein Fenster (13) in die Messkammer ein- und/oder austritt, wobei gegebenenfalls die Anregungsoptik (6) und/oder die Detektoroptik (7) innerhalb und/oder ausserhalb der Messkammer (8) angeordnet sein können.

11. Aerosolpartikelmessgerät (20) nach mindestens einem der Ansprüche 1 bis 10, **dadurch gekennzeichnet, dass** der Detektor (4) in einer Detektorbaugruppe (40) angeordnet ist, wobei die Detektorbaugruppe (40) ein Gehäuse (41) mit optischem Element (42), den Detektor (4), einen Temperaturfühler (43), ein Kühlelement (44), insbesondere ein Peltier-Element und/oder einen Passiv-Kühlkörper, sowie eine Leiterplatte zur elektrischen Kontaktierung (45) umfasst, wobei der Detektor (4) ein Silicon Photomultiplier (SiPM) ist.

12. Aerosolpartikelmessgerät (20) nach mindestens einem der Ansprüche 1 bis 11, **dadurch gekennzeichnet, dass** das Aerosolpartikelmessgerät (20) mindestens
i) einen Partikelkonzentrator (24) zum Aufkonzentrieren der Aerosolpartikel im Aerosol, wobei der Partikelkonzentrator (24) bevorzugt ein virtueller Impaktor und/oder ein Zyklon ist,
ii) einen Partikelkollektor (25) zum Sammeln der gemessenen Materialien (2),
iii) eine Partikel-Fokussier-Düse (28) um die Aerosolpartikel im Aerosol in der Trajektorie der Messkammer (8) zu bündeln,
iv) eine Baugruppe für digitale Holographie (26),
v) eine Baugruppe für zeitaufgelöste Streulichtmessung (27), gegebenenfalls mit zusätzlicher Polarisationsmessung, zur qualitativen und/oder quantitativen Bestimmung in Echtzeit des Materials (2), und/oder
vi) eine weitere Lichtquelle (3'), insbesondere einen Laser, deren emittiertes Licht (31') in Form eines Lichtstrahls entlang der Trajektorie der Messkammer (8) verläuft,
umfasst.

13. Verfahren zur qualitativen und/oder quantitativen Bestimmung von fluoreszierenden Materialien (2) in Echtzeit mittels Fluoreszenzlebenszeit Messung mit dem Aerosolpartikelmessgerät (20) nach mindestens einem der Ansprüche 1 bis 12, **dadurch gekennzeichnet, dass**
i) die Fluoreszenzlebenszeit Messung im Frequenzbereich durchgeführt wird und das von der Lichtquelle (3) emittierte Licht (31) intensitätsmoduliert wird,
ii) als Lichtquelle (3) ein Diodenlaser, ein diodengepumpter Festkörperlaser und/oder eine LED eingesetzt wird,
iii) die Materialien (2) in Form von Aerosolpartikel eines Aerosols in der Messkammer (8) des Messgeräts (1) gemessen werden,
iv) in der Messkammer (8) die Aerosolpartikel dem Licht (31) der Lichtquelle (3) ausgesetzt werden, wobei die Aerosolpartikel das Licht absorbieren und teilweise wieder emittieren,
v) das emittierte Licht mit dem Detektor (4) detektiert wird, wobei als Detektor (4) ein auf Halbleitertechnologie basierter elektronischer Photonendetektor zur Lichtdetektion, insbesondere ein Silicon Photomultiplier (SiPM), eingesetzt wird, und
vi) die erhaltenen Daten mit einem Datenverarbeitungsprogramm verarbeitet werden.

14. Verfahren nach Anspruch 13, **dadurch gekennzeichnet, dass**
- das Aerosol mittels einer Luftflusserzeugungs- und Steuervorrichtung (23) durch den Aerosol-Einlass (21) in die Messkammer (8) hinein- und durch den Aerosol-Auslass (22) wieder herausgefördert wird, und
- die Aerosolpartikel des Aerosols in der Messkammer (8) im Flug und in Echtzeit mit dem Messgerät (1) qualitativ und/oder quantitativ bestimmt werden,
- sowie gegebenenfalls
i) die Aerosolpartikel im Aerosol in mindestens einem Partikelkonzentrator (24) aufkonzentriert werden, wobei der Partikelkonzentrator (24) mindestens einen virtuellen Impaktor und/oder mindestens einen Zyklon umfasst, wobei der Schritt des Aufkonzentrierens bevorzugt vor der Fluoreszenzlebenszeit Messung erfolgt, und/oder
ii) gegebenenfalls die Aerosolpartikel im Aerosol mit mindestens einer Partikel-Fokussier-Düse (28) in der Trajektorie der Messkammer (8) gebündelt werden.

15. Verwendung des Aerosolpartikelmessgeräts (20) nach mindestens einem der Ansprüche 1 bis 12 und/oder des Verfahrens nach Anspruch 13 oder 14 zur qualitativen und/oder quantitativen Bestimmung mittels Fluoreszenzlebenszeit Messung im Frequenzbereich, insbesondere in Echtzeit, von fluoreszierenden Materialien (2) in Form von Aerosolpartikeln eines Aerosols, insbesondere von in der Luft schwebenden Pollen und/oder Sporen, sowie in der Verfahrenstechnik wie beispielsweise zur Prozess- und/oder Qualitätskontrolle von Materialien (2).

## Claims

1. An aerosol particle measuring device (20) for the qualitative and/or quantitative determination of fluorescent materials (2) in real time by means of frequency domain fluorescence lifetime measurement, comprising a measuring device (1) with a light source (3), detector (4) and measuring chamber (8), an aerosol inlet (21), an aerosol outlet (22) as well as an airflow generation and control device with electronics (23), **characterized in that**
i) the detector (4) is an electronic photon detector for light detection based on semiconductor technology, in particular a silicon photomultiplier (SiPM), and
ii) the materials (2) are aerosol particles of an aerosol and therefore are dispersed in a gas phase, whereupon the aerosol particles are determined in flight, which allows for permanent monitoring of particles in gases and in real time.

2. The aerosol particle measuring device (20) as claimed in claim 1, **characterized in that** the light (31) emitted from the light source (3) is intensity-modulated, in particular sinusoidally intensity-modulated, and/or the light source (3) is a diode laser, an LED and/or a diode-pumped solid state laser.

3. The aerosol particle measuring device (20) as claimed in claim 1 or claim 2, **characterized in that** the materials (2) in the form of aerosol particles of an aerosol are fluorescent organic and/or inorganic pure substances or mixtures and are present in the form of a solid, a liquid, a dispersion, a suspension, a paste and/or in the form of bioaerosol particles dispersed in air, such as pollen, flower pollen, spores, fungal spores, plant spores, proteins, DNA, RNA, organisms, tissues, cells, bacteria, viruses and/or minerals, and optionally have been pretreated with a fluorophore.

4. The aerosol particle measuring device (20) as claimed in at least one of claims 1 to **3, characterized in that** the measuring device (1) comprises at least one excitation optics unit (6), at least one detector optics unit (7), a measuring chamber (8), a data processing program, a lightproof housing as well as electronics for controlling the device, for signal measurement, for signal preparation, for signal analysis and for data storage.

5. The aerosol particle measuring device (20) as claimed in at least one of claims 1 to 4, **characterized in that** the aerosol particle measuring device (20) comprises a digital holography assembly (26) and/or a time-resolved light scattering measurement assembly (27), optionally with additional polarisation measurement, for the qualitative and/or quantitative determination of the material (2) in real time.

6. The aerosol particle measuring device (20) as claimed in at least one of claims 1 to 5, **characterized in that** the excitation optics unit (6) is disposed between the light source (3) and the material (2) to be determined and/or the detector optics unit (7) is disposed between the material (2) to be determined and the detector (4), wherein
i) the excitation optics unit (6) comprises at least one optical lens (9) and preferably at least one optical filter (10), optionally as well as at least one reflector (11), and/or
ii) the detector optics unit (7) comprises at least two optical lenses (9), preferably as well as at least one optical filter (10) and/or at least one spectrum divider (12), in particular an interference mirror, a prism, an optical grating, a diffraction grating and/or a multiple slit, wherein the spectrum divider (12) diffracts a portion of the light, preferably via an optical lens (9), to at least one further detector (4).

7. The aerosol particle measuring device (20) as claimed in at least one of claims 1 to 6, **characterized in that** the measuring device (1) comprises two or more light sources (3) and at least one excitation optics unit (6), wherein
i) a separate excitation optics unit (6) is disposed between each light source (3) and the material (2) to be determined, and/or
ii) a common excitation optics unit (6) is disposed between two or more light sources (3) and the material (2) to be determined,
iii) the light sources (3) have different modulation frequencies, and/or
iv) the light sources (3) emit different wavelengths.

8. The aerosol particle measuring device (20) as claimed in at least one of claims 1 to 7, **characterized in that** the measuring device (1) comprises two or more detectors (4), wherein
i) a separate detector optics unit (7) is disposed between the material (2) to be determined and one or more detectors (4), and/or
ii) only one detector optics unit (7) is disposed between the material (2) to be determined and a plurality of detectors (4), wherein the detector optics unit (7) comprises a separate optical filter (12) for the second and each further detector (4).

9. The aerosol particle measuring device (20) as claimed in at least one of claims 1 to 8, **characterized in that** the measuring device (1) comprises a further reflector (11) in order to reflect light arriving from the material (2) to the detector (4), optionally via the detector optics unit (7).

10. The aerosol particle measuring device (20) as claimed in at least one of claims 1 to 9, **characterized in that** the material (2) to be determined is disposed inside the measuring chamber (8) and at least one light source (3), at least one detector (4) and/or at least one reflector (11) is disposed outside the measuring chamber (8), wherein the light (31) enters or exits the measuring chamber through an optical lens (9) and/or a window (13), wherein optionally, the excitation optics unit (6) and/or the detector optics unit (7) may be disposed inside and/or outside the measuring chamber (8).

11. The aerosol particle measuring device (20) as claimed in at least one of claims 1 to 10, **characterized in that** the detector (4) is disposed in a detector assembly (40), wherein the detector assembly (40) comprises a housing (41) with an optical element (42), the detector (4), a temperature sensor (43), a cooling element (44), in particular a Peltier element and/or a passive cooling body, as well as a circuit board for electrical contact (45), wherein the detector (4) is a silicon photomultiplier (SiPM).

12. The aerosol particle measuring device (20) as claimed in at least one of claims 1 to 11, **characterized in that** the aerosol particle measuring device (20) comprises at least
i) a particle concentrator (24) for concentrating the aerosol particles in the aerosol, wherein the particle concentrator (24) is preferably a virtual impactor and/or a cyclone,
ii) a particle collector (25) for collecting the measured materials (2),
iii) a particle focussing nozzle (28) for concentrating the aerosol particles in the aerosol in the trajectory of the measuring chamber (8),
iv) a digital holography assembly (26),
v) a time-resolved light scattering measurement assembly (27), optionally with additional polarisation measurement, for the qualitative and/or quantitative determination of the material (2) in real time, and/or
vi) a further light source (3'), in particular a laser, from which the light (31') which is emitted passes along the trajectory of the measuring chamber (8) in the form of a beam of light.

13. A method for the qualitative and/or quantitative determination of fluorescent materials (2) in real time by means of fluorescence lifetime measurement with the aerosol particle measuring device (20) as claimed in at least one of claims 1 to 12, **characterized in that**
i) the fluorescence lifetime measurement is carried out in the frequency domain and the light (31) emitted by the light source (3) is intensity-modulated,
ii) a diode laser, a diode-pumped solid state laser and/or an LED is used as the light source (3),
iii) the materials (2), in the form of aerosol particles of an aerosol, are measured in the measuring chamber (8) of the measuring device (1),
iv) in the measuring chamber (8), the aerosol particles are exposed to the light (31) from the light source (3), wherein the aerosol particles absorb the light and partly re-emit it,
v) the emitted light is detected with the detector (4), wherein the detector (4) used is an electronic photon detector for light detection based on semiconductor technology, in particular a silicon photomultiplier (SiPM), and
vi) the data obtained are processed with a data processing program.

14. The method as claimed in claim 13, **characterized in that**
- the aerosol is conducted into the measuring chamber (8) through the aerosol inlet (21) and conducted out again through the aerosol outlet (22) by means of an airflow generation and control device (23), and
- the aerosol particles of the aerosol in the measuring chamber (8) are determined qualitatively and/or quantitatively in flight and in real time using the measuring device (1),
- as well as, optionally
i) the aerosol particles in the aerosol are concentrated in at least one particle concentrator (24), wherein the particle concentrator (24) comprises at least one virtual impactor and/or at least one cyclone, wherein the concentration step is preferably carried out before the fluorescence lifetime measurement, and/or
ii) optionally, the aerosol particles in the aerosol are concentrated in the trajectory of the measuring chamber (8) with at least one particle focussing nozzle (28).

15. Use of the aerosol particle measuring device (20) as claimed in at least one of claims 1 to 12 and/or of the method as claimed in claim 13 or claim 14, for the qualitative and/or quantitative determination, by means of frequency domain fluorescence lifetime measurement, in particular in real time, of fluorescent materials (2) in the form of aerosol particles of an aerosol, in particular of pollen and/or spores suspended in the air, as well as in process engineering such as, for example, for the process control and/or quality control of materials (2).

## Revendications

1. Appareil de mesure (20) de particules d'aérosol, destiné à la détermination qualitative et/ou quantitative en temps réel de matières (2) fluorescentes au moyen d'une mesure de la durée de vie de la fluorescence dans la gamme de fréquences, comprenant un appareil de mesure (1), pourvu d'une source lumineuse (3), d'un détecteur (4) et une chambre de mesure (8), qui comprend une entrée (21) d'aérosol, une sortie (22) d'aérosol, ainsi qu'un dispositif de génération d'un flux d'air et de commande pourvu d'un système électronique (23), **caractérisé en ce que**
i) le détecteur (4) est un détecteur électronique de photons basé sur la technologie des semiconducteurs pour la détection de lumière, notamment un photomultiplicateur au silicone (SiPM) et
ii) les matières (2) fluorescentes sont des particules d'aérosol d'un aérosol et sont ainsi dispersées dans une phase gazeuse, en conséquence de quoi, les particules d'aérosol sont déterminées en vol, ce qui permet une supervision permanente de particules dans des gaz et en temps réel.

2. Appareil de mesure (20) de particules d'aérosol selon la revendication 1, **caractérisé en ce que** la lumière (31) émise par la source lumineuse (3) est à intensité modulée, notamment à intensité sinusoïdalement modulée, et/ou **en ce que** la source lumineuse (3) est un laser à diodes, une LED et/ou un laser solide à pompage à diode.

3. Appareil de mesure (20) de particules d'aérosol selon la revendication 1 ou 2, **caractérisé en ce que** les matières (2) fluorescentes sous la forme de particules d'aérosol d'un aérosol sont des substances fluorescentes pures organiques et/ou inorganiques ou des mélanges et se présentent sous la forme d'un solide, d'un liquide, d'une dispersion, d'une suspension, d'une pâte, et/ou sous la forme de particules d'aérosols biologiques dispersées dans l'air, telles qu'un pollen, une poussière de pollen, des spores, des spores fongiques, des spores végétaux, des protéines, un ADN, un ARN, des organismes, des tissus, des cellules, des bactéries, des virus, et/ou des minéraux et ont été traitées préalablement le cas échéant avec un fluorophore.

4. Appareil de mesure (20) de particules d'aérosol selon au moins l'une quelconque des revendications 1 à 3, **caractérisé en ce que** l'appareil de mesure (1) comprend au moins une optique d'excitation (6), au moins une optique de détection (7), une chambre de mesure (8), un programme de traitement de données, un boitier opaque, ainsi qu'un système électronique, destiné à la commande de l'appareil, à la mesure de signaux, au traitement des signaux, à l'évaluation de signaux et à la mémorisation de données.

5. Appareil de mesure (20) de particules d'aérosol selon au moins l'une quelconque des revendications 1 à 4, **caractérisé en ce que** l'appareil de mesure (20) de particules d'aérosol comprend un module pour une holographie (26) numérique et/ou un module pour une mesure (27) résolue dans la temps de la lumière diffusée, le cas échéant doté d'une mesure additionnelle de la polarisation, pour la détermination qualitative et/ou quantitative de la matière (2) en temps réel.

6. Appareil de mesure (20) de particules d'aérosol selon au moins l'une quelconque des revendications 1 à 5, **caractérisé en ce que** l'optique d'excitation (6) est placée entre la source lumineuse (3) et la matière (2) à déterminer et/ou l'optique de détection (7) est placée entre la matière (2) à déterminer et le détecteur (4),
i) l'optique d'excitation (6) comprenant au moins une lentille (9) optique et de préférence au moins un filtre (10) optique, ainsi que le cas échéant au moins un réflecteur (11) et/ou
ii) l'optique de détection (7) comprenant au moins deux lentilles (9) optiques, ainsi que de préférence au moins un filtre (10) optique et/ou au moins un diviseur spectral (12), notamment un miroir interférentiel, un prisme, un réseau optique, un réseau de diffraction et/ou une fente multiple, le diviseur spectral (12) dérivant une partie de la lumière, de préférence par l'intermédiaire d'une lentille (9) optique, vers au moins un détecteur (4) additionnel.

7. Appareil de mesure (20) de particules d'aérosol selon au moins l'une quelconque des revendications 1 à 6, **caractérisé en ce que** l'appareil de mesure (1) comprend deux sources lumineuses (3) ou plus et au moins une optique d'excitation (6),
i) entre chaque source lumineuse (3) et la matière (2) à déterminer étant placée une optique d'excitation (6) séparée et/ou
ii) entre deux sources lumineuses (3) ou plus et la matière (2) à déterminer étant placée une optique d'excitation (6) commune,
iii) les sources lumineuses (3) présentant différentes modulations de fréquence et/ou
iv) les sources lumineuses (3) émettant dans différentes longueurs d'ondes.

8. Appareil de mesure (20) de particules d'aérosol selon au moins l'une quelconque des revendications 1 à 7, **caractérisé en ce que** l'appareil de mesure (1) comprend deux détecteurs (4) ou plus, entre
i) la matière (2) à déterminer et un ou plusieurs détecteurs (4) étant placée une optique de détection (7) séparée et/ou
ii) la matière (2) à déterminer et plusieurs détecteurs (4) n'étant placée qu'une seul optique de détection (7), l'optique de détection (7) comportant pour le deuxième (4) et chaque détecteur additionnel un filtre (12) optique séparé.

9. Appareil de mesure (20) de particules d'aérosol selon au moins l'une quelconque des revendications 1 à 8, **caractérisé en ce que** l'appareil de mesure (1) comprend un réflecteur (11) additionnel, destiné à réfléchir vers le détecteur (4) de la lumière provenant de la matière (2), le cas échéant par l'intermédiaire de l'optique de détection (7).

10. Appareil de mesure (20) de particules d'aérosol selon au moins l'une quelconque des revendications 1 à 9, **caractérisé en ce que** la matière (2) à déterminer est placée à l'intérieur de la chambre de mesure (8) et au moins une source lumineuse (3), au moins un détecteur (4) et/ou au moins un réflecteur (11) est placé à l'extérieur de la chambre de mesure (8), la lumière (31) entrant à travers une lentille (9) optique et/ou une fenêtre (13) dans la chambre de mesure et/ou en sortant, le cas échéant, l'optique d'excitation (6) et/ou l'optique de détection (7) pouvant être placées à l'intérieur et/ou à l'extérieur de la chambre de mesure (8).

11. Appareil de mesure (20) de particules d'aérosol selon au moins l'une quelconque des revendications 1 à 10, **caractérisé en ce que** le détecteur (4) est placé dans un module de détection (40), le module de détection (40) comprenant un boitier (41) pourvu d'un élément (42) optique, le détecteur (4), une sonde de température (43), un élément de refroidissement (44), notamment un élément de Peltier et/ou un dissipateur de chaleur passif ainsi qu'une carte de circuit imprimé pour la mise en contact (45) électrique, le détecteur (4) étant un photomultiplicateur au silicone (SiPM).

12. Appareil de mesure (20) de particules d'aérosol selon au moins l'une quelconque des revendications 1 à 11, **caractérisé en ce que** l'appareil de mesure (20) de particules d'aérosol comprend au moins
i) un concentrateur (24) de particules, destiné à concentrer les particules d'aérosol dans l'aérosol, le concentrateur (24) de particules étant de préférence un impacteur virtuel et/ou cyclone,
ii) un collecteur (25) de particules, destiné à collecter les matières (2) fluorescentes mesurées,
iii) une buse (28) de focalisation des particules, destinée à regrouper les particules d'aérosol dans l'aérosol dans la trajectoire de la chambre de mesure (8),
iv) un module pour une holographie (26) numérique,
v) un module pour une mesure résolue dans le temps de la lumière diffusée (27), le cas échéant avec une mesure additionnelle de la polarisation, pour la détermination qualitative et/ou quantitative en temps réel de la matière (2) et/ou
vi) une source lumineuse (3') additionnelle, notamment un laser, dont la lumière (31') émise s'écoule sous la forme d'un faisceau lumineux le long de la trajectoire de la chambre de mesure (8).

13. Procédé, destiné à la détermination qualitative et/ou quantitative de matières (2) fluorescentes en temps réel au moyen d'une mesure de la durée de vie de la fluorescence à l'aide de l'appareil de mesure (20) de particules d'aérosol selon au moins l'une quelconque des revendications 1 à 12, **caractérisé en ce que**
i) l'on procède à la mesure de la durée de vie de la fluorescence dans la gamme de fréquences et l'on module en intensité la lumière (31) émise par la source lumineuse (3),
ii) l'on met en œuvre en tant que source lumineuse (3) un laser à diodes, un laser solide à pompage à diode et/ou une LED,
iii) l'on mesure les matières (2) fluorescentes sous la forme de particules d'aérosol d'un aérosol dans la chambre de mesure (8) de l'appareil de mesure (1),
iv) dans la chambre de mesure (8), l'on expose les particules d'aérosol à la lumière (31) de la source lumineuse (3), les particules d'aérosol absorbant la lumière et la réémettant partiellement,
v) l'on détecte la lumière émise à l'aide du détecteur (4), en tant que détecteur (4) étant mis en œuvre un détecteur électronique de photons basé sur la technologie des semiconducteurs pour la détection de lumière, notamment un photomultiplicateur au silicone (SiPM) et
vi) l'on traite les données obtenues à l'aide d'un programme de traitement de données.

14. Procédé selon la revendication 13, **caractérisé en ce que**
- l'on transporte l'aérosol au moyen d'un dispositif (23) de génération d'un flux d'air et de commande à travers l'entrée (21) d'aérosol dans la chambre de mesure (8) et on le retransporte vers l'extérieur à travers la sortie (22) d'aérosol et
- l'on détermine qualitativement et/ou quantitativement les particules d'aérosol de l'aérosol dans la chambre de mesure (8) au vol et en temps réel à l'aide de l'appareil de mesure (1),
- et le cas échéant
i) l'on concentre les particules d'aérosol dans l'aérosol dans au moins un concentrateur (24) de particules, le concentrateur (24) de particules comprenant au moins un impacteur virtuel et/ou au moins un cyclone, l'étape de concentration s'effectuant de préférence avant la mesure de la durée de vie de la fluorescence et/ou
ii) le cas échéant, l'on regroupe les particules d'aérosol dans l'aérosol à l'aide d'au moins une buse (28) de focalisation des particules dans la trajectoire de la chambre de mesure (8).

15. Utilisation de l'appareil de mesure (20) de particules d'aérosol selon au moins l'une quelconque des revendications 1 à 12 et/ou du procédé selon la revendication 13 ou 14 pour la détermination qualitative et/ou quantitative au moyen d'une mesure de la durée de vie de la fluorescence dans la gamme de fréquences, notamment en temps réel, de matières (2) fluorescentes sous la forme de particules d'aérosol d'un aérosol, notamment de pollen et/ou de spores flottant dans l'air, ainsi que dans la technique des procédés, comme par exemple pour le contrôle de processus et/ou de la qualité de matières (2) fluorescentes.
